# FASCICULE DE BREVET EUROPEEN

(11) **EP 0 429 381 B1**
(45) Date de publication et mention de la délivrance du brevet: **01.03.1995**
(21) Numéro de dépôt: 90440106.4
(22) Date de dépôt: 22.11.1990
(51) Int. Cl.: A01D 67/00, A01D 34/66

(54) **Machine agricole avec dispositif de suspension du groupe d'organes de travail perfectionné**
Landmaschine mit verbesserter Aufhängungsvorrichtung der Arbeitswerkzeugeeinheit
Farm machine having a deformable suspension mechanism

(30) Priorité: 24.11.1989 FR 8915684
(43) Date de publication de la demande: 29.05.1991
(73) Titulaire: KUHN S.A., F-67700 Saverne (FR)
(72) Inventeur: Wattron, Bernard, F-67700 Haegen (FR); Helfer, Roland, F-67450 Lampertheim (FR)

(56) Documents cités:
- EP-A- 0 297 012
- DE-U- 8 701 093
- FR-A- 2 086 286
- FR-A- 2 110 911
- FR-A- 2 414 863
- FR-A- 2 608 362
- FR-A- 2 614 755
- GB-A- 1 583 983
- GB-A- 2 052 237
- US-A- 2 005 618
- Prospektus Krone "faucheuse frontale à disques AFL".

## Description

La présente invention concerne une machine agricole comportant au moins un groupe d'organes de travail et une structure munie notamment d'un moyen d'attelage permettant, lors de l'utilisation de ladite machine agricole, d'atteler celle-ci à un véhicule moteur, ledit groupe d'organes de travail étant lié à ladite structure au moyen d'un dispositif de suspension comportant des moyens de suspension liés d'une part à la structure par des premières articulations et, d'autre part, au groupe d'organes de travail par des deuxièmes articulations, lesdits moyens de suspension comportant soit :
- un premier organe de suspension central dont la première articulation et la deuxième articulation sont chacune du type rotule dont les centres définissent, lorsque le groupe d'organes de travail est horizontal, un premier plan vertical dirigé vers l'avant durant le travail, et au moins un organe de suspension latéral dont l'axe de la première articulation et l'axe de la deuxième articulation définissent au moins sensiblement un deuxième plan au moins sensiblement orthogonal au premier plan lorsque le groupe d'organes de travail est horizontal, et coupant le premier plan suivant une première droite, ledit (lesdits) organe(s) de suspension latéral (latéraux) formant avec le premier organe de suspension central un premier quadrilatère déformable dans une direction au moins sensiblement verticale, ladite deuxième articulation d'un organe de suspension latéral étant éloignée du premier plan et définissant une deuxième droite orthogonale à la première droite (préambule de la revendication indépendante 1)
soit :
- un organe de suspension central rigide dont la première articulation et la deuxième articulation sont chacune du type rotule dont les centres définissent, lorsque le groupe d'organes de travail est horizontal, un premier plan vertical dirigé vers l'avant durant le travail, et au moins deux organes de suspension latéraux rigides dont les axes des premières articulations et les axes des deuxièmes articulations définissent au moins sensiblement un deuxième plan au moins sensiblement orthogonal au premier plan lorsque le groupe d'organes de travail est horizontal, et coupant le premier plan suivant une première droite, lesdits organes de suspension latéraux formant avec l'organe de suspension central un quadrilatère déformable dans une direction au moins sensiblement verticale, lesdites deuxièmes articulations des organes de suspension latéraux étant éloignées du premier plan et définissant une deuxième droite orthogonale à la première droite (préambule de la revendication indépendante 2).

Il est connu une telle machine agricole, réalisée sous forme de faucheuse (DE-U-87 01093 et prospectus KRONE "faucheuse frontale à disques AFL" réf. NIE 7-1.88). Cette faucheuse connue est destinée à être attelée à l'attelage frontal d'un tracteur. Elle comporte un châssis et un groupe de fauche lié à celui-ci par un dispositif de suspension à parallélogramme déformable. Ce châssis comporte une console centrale qui est munie, à l'arrière, d'un triangle d'attelage permettant d'atteler la faucheuse à l'attelage frontal du tracteur et qui s'étend au-dessus du groupe de fauche. Ce dernier est lié à l'avant de la console au moyen dudit dispositif de suspension à parallélogramme déformable, lequel comporte trois bielles de suspension : une bielle de suspension centrale rigide et deux bielles de suspension latérales également rigides. La bielle de suspension centrale s'étend plus haut que les deux bielles de suspension latérales. Ces dernières s'étendent, quant à elles, à une distance relativement importante l'une de l'autre. La bielle de suspension centrale est liée à la console au moyen d'une première rotule et au groupe de fauche au moyen d'une deuxième rotule. Les deux bielles de suspension latérales sont également liées chacune à la console au moyen d'une rotule. Elles sont, par contre, liées chacune au groupe de fauche au moyen d'une articulation cylindrique. Du reste, elles s'étendent, en vue de dessus, au moins sensiblement parallèlement suivant la direction d'avance au travail. En vue de côté et durant le travail, les bielles de suspension s'étendent vers l'arrière et vers le bas depuis leur articulation respective à la console jusqu'à leur articulation respective au groupe de fauche.

Grâce à ce dispositif de suspension à parallélogramme déformable, le groupe de fauche de cette machine connue peut monter et descendre librement. Le pivotement du groupe de fauche autour d'une droite dirigée vers l'avant ne peut par contre se réaliser que parce que les articulations cylindriques des deux bielles de suspension latérales sont prévues avec un jeu suffisant (qui devrait être plus important que le jeu de fonctionnement usuel d'une articulation cylindrique). En tous cas, ce pivotement reste relativement limité et la durée de vie des articulations cylindriques des deux bielles de suspension latérales peut s'avérer problématique lors d'une utilisation intensive.

Dans cette faucheuse connue, les articulations avant des trois bielles de suspension sont certes prévues sur une console centrale. Toutefois, les articulations avant des deux bielles de suspension latérales sont relativement éloignées l'une de l'autre. Ceci est nécessaire pour pouvoir obtenir une liaison suffisante entre lesdites bielles de suspension latérales et le groupe de fauche, capable d'absorber les efforts apparaissant lors de l'utilisation de la faucheuse.

Dans la EP-A-0 297 012, il est connu une faucheuse traînée comportant un châssis qui s'étend transversalement à la direction d'avance au travail. A chacune de ses extrémités, ce châssis est muni d'une roue par l'intermédiaire desquelles il repose sur le sol. Dans la partie médiane, le châssis est lié à un timon qui permet d'atteler la faucheuse à un tracteur et qui est lié au châssis par une articulation d'axe vertical. Le châssis supporte un groupe d'organes de travail au moyen d'un dispositif de suspension à parallélogramme déformable. Ce dispositif de suspension comporte deux paires de bielles de suspension s'étendant chacune près d'une extrémité du châssis.

Grâce au dispositif de suspension à parallélogramme déformable, le groupe d'organes de travail de cette faucheuse connue peut également monter et descendre librement. Le pivotement du groupe d'organes de travail autour d'une droite dirigée vers l'avant ne peut par contre se réaliser que parce que les deux paires de bielles de suspension sont relativement éloignées l'une de l'autre. Dans tous les cas, ce pivotement reste également relativement limité et les articulations des bielles de suspension risquent d'être soumises à des efforts importants lors dudit pivotement.

Du fait que les deux paires de bielles de suspension soient très éloignées l'une de l'autre, permet certes d'obtenir une bonne liaison du dispositif de suspension au groupe d'organes de travail. Ceci nécessite toutefois des points de liaison également très éloignés l'un de l'autre sur le châssis.

Dans la FR-A-2 608 362, il est également connu une faucheuse-conditionneuse traînée. Celle-ci comporte un châssis et un groupe d'organes de travail articulé lié à celui-ci par l'intermédiaire d'une structure intermédiaire et d'un dispositif de suspension à parallélogramme déformable. En vue de dessus, le châssis a une forme de losange dont le grand axe est dirigé transversalement à la direction de travail, tandis que le petit axe est dirigé suivant la direction de travail. Chaque côté du losange est constitué par une poutre. Ces poutres sont fixées à leur extrémité intérieure respective à une poutre centrale matérialisant le petit axe du losange. A leur extrémité extérieure, les poutres sont fixées deux à deux à un montant respectif. Le châssis, ainsi formé, repose sur deux roues dont chacune est liée à un montant au moyen d'un bras de roue. Le dispositif de suspension de cette machine connue comporte une bielle de suspension centrale rigide et deux bielles de suspension latérales également rigides. La bielle de suspension centrale est liée au châssis par une articulation cylindrique et à la structure intermédiaire par une articulation rotulante. Les deux bielles latérales, quant à elles, sont liées à la fois au châssis et à la structure intermédiaire par des articulations rotulantes.

Ce dispositif de suspension à parallélogramme déformable, combiné avec la structure intermédiaire et avec l'articulation du groupe d'organes de travail, permet au groupe d'organes de travail de s'adapter au relief du terrain.

Du reste, les deux bielles de suspension latérales sont relativement éloignées l'une de l'autre. Ceci garantit une bonne liaison de ces bielles de suspension latérales à la structure intermédiaire (à laquelle est lié le groupe d'organes de travail) capable d'absorber les efforts apparaissant lors de l'utilisation de la faucheuse. Ceci nécessite par contre un châssis de grande dimension sur lequel les bielles de suspension latérales peuvent être accrochées. Un tel châssis augmente le poids de la machine, ainsi que ses coûts de réalisation.

L'objectif de la présente invention consiste par conséquent à créer une machine agricole comportant un dispositif de suspension ne présentant pas les inconvénients des dispositifs connus, et dans laquelle il est possible de regrouper les points de liaison du dispositif de suspension au châssis, tout en obtenant une bonne liaison du dispositif de suspension au groupe d'organes de travail capable d'absorber les efforts apparaissant notamment durant l'utilisation de la machine agricole.

A cet effet, une première machine agricole selon la présente idée inventive est caractérisée par le fait que lesdits moyens de suspension comportent en sus un deuxième organe de suspension central formant avec le premier organe de suspension central un deuxième quadrilatère déformable dans une direction au moins sensiblement verticale équivalent au premier quadrilatère, et dont l'axe de la première articulation et l'axe de la deuxième articulation s'étendent au moins sensiblement dans le deuxième plan, ladite deuxième articulation s'étendant en sus au moins sensiblement au niveau de la première droite et son axe ayant en sus au moins sensiblement un point commun avec la première droite et avec la deuxième droite, et que la première articulation d'un organe de suspension latéral s'étend au moins sensiblement dans le premier plan, son axe étant situé au moins sensiblement sur l'axe de la première articulation du deuxième organe de suspension central (revendication indépendante 1).

Une deuxième machine agricole selon la présente idée inventive est caractérisée par le fait que les premières articulations des organes de suspension latéraux s'étendent au moins sensiblement dans le premier plan, leurs axes étant au moins sensiblement confondus (revendication indépendante 2).

Grâce à ces différentes caractéristiques, les dispositifs de suspension des machines agricoles de l'invention ne possèdent plus l'inconvénient des dispositifs de suspension des machines agricoles connues.

En effet, dans les machines agricoles de l'invention, le groupe d'organes de travail peut
a) parfaitement se déplacer verticalement ou sensiblement verticalement vers le haut et vers le bas par rapport à la structure et ceci grâce au quadrilatère déformable, et
b) dans n'importe quelle position en hauteur du quadrilatère déformable, pivoter librement notamment autour de la première droite et ceci sans qu'il soit nécessaire de prévoir des jeux.

Le ou les organes de suspension latéraux sont notamment prévus pour éviter un pivotement du groupe d'organes de travail autour d'une droite passant par l'axe de la deuxième articulation de l'organe de suspension central ayant deux articulations du type rotule, et par le point d'intersection de la première et de la deuxième droite.

Le dispositif de suspension des machines agricoles selon l'invention présente également l'avantage de pouvoir grouper les premières articulations des organes de suspension centraux et des organes de suspension latéraux dans une même zone de la structure munie du moyen d'attelage. Il en découle une simplification de la construction de celle-ci. Ceci permet, par exemple, de munir très facilement cette structure d'une unité à laquelle est lié le moyen d'attelage par l'intermédiaire duquel la machine agricole est attelée à un véhicule moteur, et qui supporte, le cas échéant, une partie au moins des moyens de transmission transmettant au groupe d'organes de travail le mouvement reçu d'une source motrice. Cette unité pourra servir à toute une gamme de machines agricoles de largeurs de travail différentes. Il suffira, pour cela, de lier à celle-ci le ou les groupes d'organes de travail adéquats au moyen du ou des dispositifs de suspension, dont les premières articulations respectives sont groupées dans une même zone.

Comme du reste, les deuxièmes articulations des organes de suspension latéraux sont éloignées du premier plan, on obtient une très bonne liaison entre le dispositif de suspension et le groupe d'organes de travail. Par ailleurs, ces organes de suspension latéraux créent une rigidification du groupe d'organes de travail, qui est fonction de la distance séparant leurs deuxièmes articulations du premier plan. Ceci présente notamment un grand intérêt dans les machines de grande largeur de travail, dans lesquelles le groupe d'organes de travail a une dimension relativement grande.

Si le groupe d'organes de travail présente un plan médian vertical, il pourra, conformément à une caractéristique supplémentaire de l'invention, être prévu que le premier plan soit au moins sensiblement confondu avec ledit plan médian.

En travail normal, le premier plan pourra s'étendre avantageusement au moins sensiblement suivant la direction d'avance au travail.

Pour permettre au groupe d'organes de travail de s'adapter aisément, sans effort excessif, au relief du sol, il pourra être prévu que le premier et le deuxième quadrilatère déformable soient tirés au travail, c'est-à-dire que les premières articulations d'un organe de suspension central de même que d'un organe de suspension latéral s'étendent, compte tenu du sens d'avance au travail, plus en avant que leurs deuxièmes articulations. Avantageusement, le premier et le deuxième quadrilatère déformable seront même réalisés chacun sous la forme d'un parallélogramme déformable.

Dans l'invention, il pourra également être prévu que la première articulation d'un organe de suspension latéral soit du type rotule.

La deuxième articulation d'un organe de suspension latéral pourra, bien entendu, être du type cylindrique. Toutefois, pour une simplification de la réalisation pratique, il sera souhaitable qu'elle soit également du type rotule.

Selon une caractéristique supplémentaire, il pourra être prévu au moins un organe de suspension latéral de chaque côté de la première droite. Dans ce cas, il sera préférable que les deuxièmes articulations desdits orga nes de suspension latéraux s'étendent au moins sensiblement symétriquement par rapport à la première droite.

Selon une caractéristique supplémentaire, il pourra également être prévu que l'un au moins des organes de suspension latéraux soit muni d'organes de réglage destinés au réglage de la distance séparant sa première articulation de sa deuxième articulation. Ces organes de réglage permettent tout d'abord le réglage de la longueur correcte de l'organe de suspension latéral pour permettre le montage de celui-ci. Mais, ces organes de réglage permettent également la mise de l'organe en suspension latéral sous précontrainte, ce qui a pour effet d'augmenter la rigidité de la construction.

Dans une réalisation préférée d'une première machine agricole selon la présente idée inventive, le deuxième organe de suspension central s'étend plus haut et, préférentiellement, au-dessus du premier organe de suspension central.

Dans une réalisation préférée d'une deuxième machine agricole selon la présente idée inventive, les organes de suspension latéraux s'étendent plus haut et, préférentiellement, au-dessus de l'organe de suspension central.

Dans certaines machines agricoles, il est souhaitable de limiter ou d'empêcher le déplacement du groupe d'organes de travail transversalement à la direction d'avance au travail. A cet effet, il pourra être prévu, selon une caractéristique supplémentaire, que la machine agricole de l'invention comporte, en sus, des moyens limitant ou empêchant le déplacement du groupe d'organes de travail transversalement à la direction d'avance au travail.

Dans une réalisation d'une première machine agricole selon la présente idée inventive, il pourra être prévu que ces moyens soient constitués par la première articulation du deuxième organe de suspension central, qui est du type cylindrique, dont l'axe est au moins sensiblement orthogonal au premier plan.

Avantageusement, cette première articulation cylindrique pourra même être du type pivot.

Cette articulation du type cylindrique ou pivot pourra être réalisée par au moins une portée cylindrique ou par deux rotules espacées l'une de l'autre et dont les centres définissent l'axe de ladite articulation.

Dans une autre réalisation d'une première machine agricole selon la présente idée inventive, il pourra être prévu que la première articulation du deuxième organe de suspension central soit du type rotule et que les moyens limitant ou empêchant le déplacement du groupe d'organes de travail transversalement à la direction d'avance au travail, limitent ou condamnent le pivotement du groupe d'organes de travail autour d'une droite passant par les centres des premières articulations des organes de suspension centraux.

Il pourra être prévu que ces moyens agissent directement sur le groupe d'organes de travail.

Mais, il pourra également être prévu que ceux-ci agissent directement ou indirectement sur le deuxième organe de suspension central.

Dans ces deux cas, lesdits moyens pourront être constitués par deux butées solidaires de la structure de la machine agricole.

Dans le deuxième cas, lesdits moyens pourront être constitués par un organe qui s'étend entre deux surfaces de guidage au moins sensiblement planes et au moins sensiblement parallèles au premier plan. Si la deuxième articulation du deuxième organe de suspension central est du type rotule, celui-ci ne tourne pas nécessairement autour de la première droite qui constitue son axe longitudinal, lorsque le groupe d'organes de travail tourne autour de ladite première droite. Dans ce cas, l'organe s'étendant entre les deux surfaces de guidage pourra avoir la forme adéquate permettant sa translation, pratiquement sans jeu, entre lesdites surfaces de guidage.

Il pourra cependant être prévu que la deuxième articulation du deuxième organe de suspension central soit du type cylindrique. Dans ce cas, ledit deuxième organe de suspension central tourne autour de la première droite qui constitue son axe longitudinal, lorsque le groupe d'organes de travail tourne autour de cette première droite.

Du reste, il pourra, selon un autre agencement, être prévu que lesdits moyens agissent sur le deuxième organe de suspension central via l'un au moins des organes de suspension latéraux.

Dans ces deux cas, l'organe s'étendant entre les deux surfaces de guidage, pourra comporter une partie cylindrique dont l'axe longitudinal est au moins sensiblement confondu avec la première droite. De cette sorte, ladite partie cylindrique peut être translatée, pratiquement sans jeu, entre les deux surfaces de guidage et tourner autour de son axe longitudinal.

Selon l'agencement retenu, un organe de suspension latéral pourra être soit rigide, soit du type essentiellement ou uniquement capable de travailler à la traction. Dans ce dernier cas, ledit organe de suspension latéral pourra être, par exemple, constitué d'un câble.

Dans une réalisation d'une deuxième machine agricole selon la présente idée inventive, il pourra être prévu que les moyens limitant ou empêchant le déplacement du groupe d'organes de travail transversalement à la direction d'avance au travail, limitent ou condamnent le pivotement du groupe d'organes de travail autour d'une droite passant par le centre de la première articulation de l'organe de suspension central et les centres des premières articulations des organes de suspension latéraux.

Il pourra être prévu que ces moyens agissent directement sur le groupe d'organes de travail.

Mais il pourra également être prévu que ceux-ci agissent sur l'un au moins des organes de suspension latéraux. Dans ce cas, lesdits moyens pourront être constitués par un doigt cylindrique, dont l'axe longitudinal est au moins sensiblement confondu avec la première droite, et deux surfaces de guidage au moins sensiblement planes et au moins sensiblement parallèles au premier plan, entre lesquelles s'étend le doigt cylindrique. Dans ce cas, ledit doigt cylindrique pourra être translaté, pratiquement sans jeu, entre les deux surfaces de guidage et tourner autour de son axe longitudinal.

Avantageusement, ledit doigt cylindrique est solidaire de l'un au moins des organes de suspension latéraux.

Selon une autre caractéristique supplémentaire, il pourra être avantageusement prévu que la machine agricole de l'invention comporte plusieurs organes de suspension latéraux liés rigidement entre eux.

Il pourra également être prévu que le groupe d'organes de travail soit rigide.

Compte tenu de l'agencement des dispositifs de suspension qui viennent d'être décrits, la structure de la machine agricole pourra comporter une simple console à l'extrémité frontale de laquelle sont liés le ou les organes de suspension centraux, de même que le ou les organes de suspension latéraux.

D'autres caractéristiques de l'invention apparaissent dans les autres sous-revendications, ainsi que dans la description suivante de plusieurs exemples, non limitatifs, de réalisation de l'invention, faite en référence au dessin annexé sur lequel :
- la figure 1 représente une vue de dessus d'une machine agricole selon l'invention attelée à un tracteur agricole,
- la figure 2 représente une vue latérale du corps de ladite machine,
- la figure 3 représente une vue suivant III défini sur la figure 2 (seul le châssis a été coupé),
- la figure 4 représente une vue schématique en perspective du dispositif de suspension,
- la figure 5 représente une vue en coupe suivant le plan V défini sur la figure 2,
- la figure 6 représente une vue en coupe suivant le plan VI défini sur la figure 2, et
- les figures 7 à 10 représentent une vue schématique en perspective d'autres exemples de réalisation du dispositif de suspension.

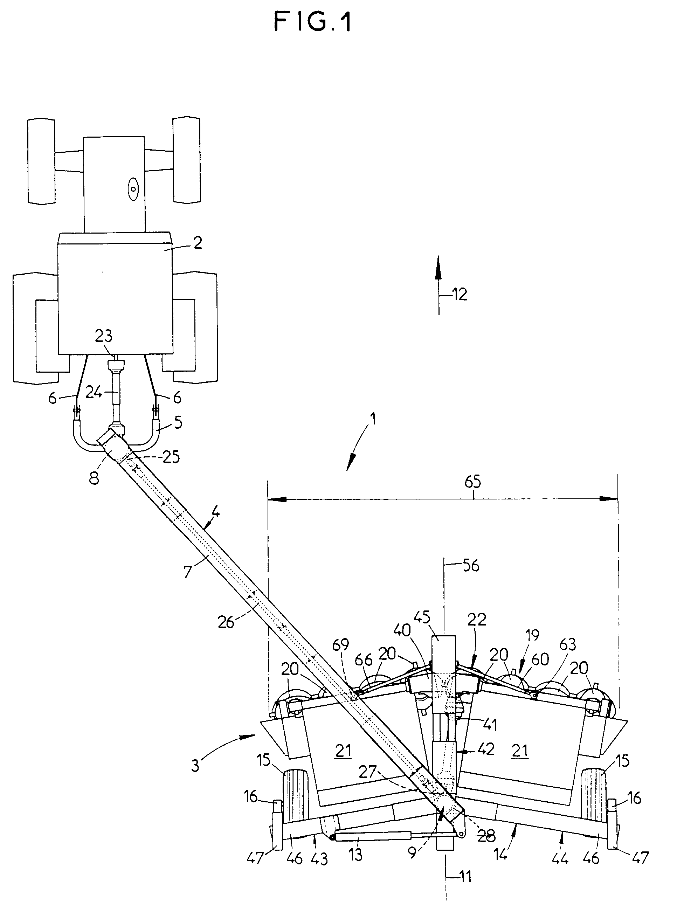

La figure 1 montre une machine agricole selon l'invention, réalisée sous forme de faucheuse (1). Celle-ci est attelée à un tracteur agricole (2).

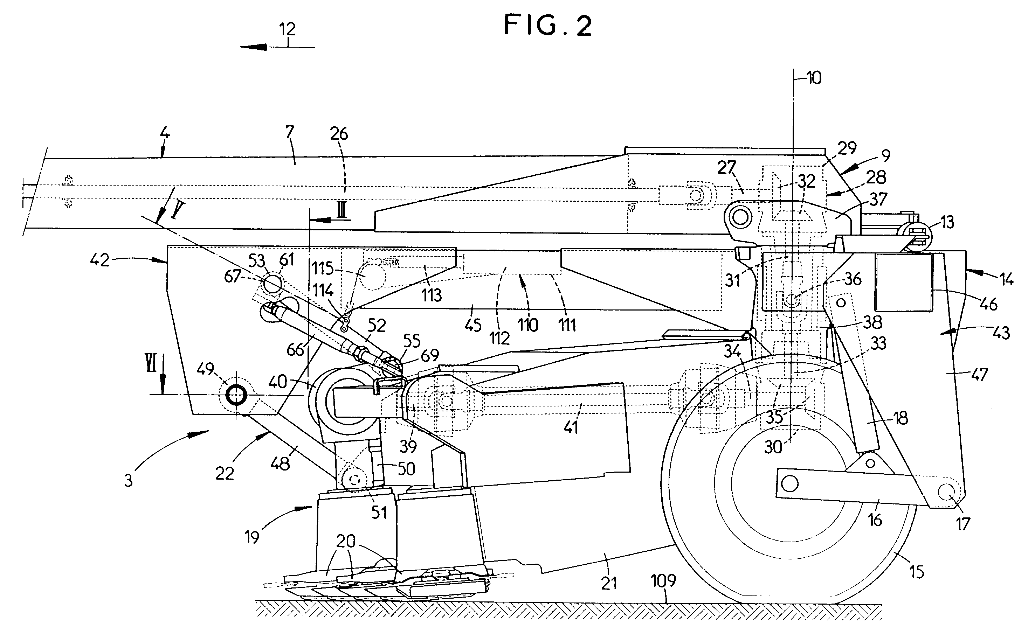

Elle se compose d'un corps (3) et d'un timon (4). Le timon (4), quant à lui, se compose d'un timon primaire (5) destiné à être attelé aux bras inférieurs (6) de l'attelage du tracteur agricole (2) et un timon secondaire (7) lié au corps (3) de la faucheuse (1). Le timon primaire (5) est lié à l'extrémité frontale du timon secondaire (7) au moyen d'un dispositif de liaison (8) connu de l'homme de l'art et qui autorise notamment un pivotement du timon primaire (5) par rapport au timon secondaire (7) autour d'un axe au moins sensiblement vertical. Près de son extrémité arrière, le timon secondaire (7) est lié au corps (3) au moyen d'une articulation (9) d'axe géométrique (10) (figure 2) au moins sensiblement vertical et s'étendant au moins sensiblement dans le plan vertical médian (11) du corps (3), dirigé suivant la direction d'avance (12) au travail. La position angulaire du timon (4) par rapport au corps (3) peut être modifiée en faisant pivoter le timon (4) autour de l'axe (10) de l'articulation (9). La mise dans la position angulaire souhaitée et le maintien dans celle-ci sont réalisés par un vérin hydraulique (13). Grâce à cet agencement, le corps (3) de la faucheuse (1) peut, notamment au travail, s'étendre -vu de l'arrière dans la direction d'avance (12) au travail- soit à droite, soit à gauche du tracteur agricole (2). Ceci autorise le fauchage en aller et retour.

Le corps (3) de la faucheuse (1) comporte un châssis (14) qui s'appuie sur le sol -notamment au travail- au moyen de deux roues (15) qui s'étendent chacune près d'une extrémité extérieure respective dudit chassis (14). Chaque roue (15) est liée au chassis (14) au moyen d'un bras de roue (16) lui-même lié audit chassis (14) au moyen d'une articulation du type pivot (17) d'axe géométrique au moins sensiblement horizontal et dirigé au moins sensiblement perpendiculairement à la direction d'avance (12) au travail. Les axes géométriques des articulations (17) des deux roues (15) sont au moins sensiblement confondus. Entre chaque bras de roue (16) et le châssis (14) est par ailleurs prévu un vérin hydraulique (18) qui permet de faire pivoter le bras de roue (16) et la roue (15) correspondante par rapport au chassis (14) autour de l'axe géométrique de l'articulation (17) correspondante. Ceci permet au châssis (14) d'être approché du sol (109) pendant la phase de fauchage et d'être éloigné du sol (109) lorsque le fauchage est interrompu.

Le corps (3) de la faucheuse (1) comporte, par ailleurs, un groupe d'organes de travail qui est ici constitué par un mécanisme de récolte (19) muni d'organes de coupe (20) et d'organes de traitement (21) du produit coupé par les organes de coupe (20), tels que des organes de conditionnement par exemple. Ce mécanisme de récolte (19) est lié au châssis (14) au moyen d'un dispositif de suspension (22) qui sera décrit ultérieurement plus en détail.

L'entraînement du mécanisme de récolte (19) est réalisé à partir de la prise de force (23) du tracteur (2) qui attaque, par l'intermédiaire d'un arbre télescopique à joints universels (24), l'arbre d'entrée (non représenté) du dispositif de liaison (8) qui est également, d'une manière connue de l'homme de l'art, un dispositif de transmission du mouvement. L'arbre de sortie (25) du dispositif de liaison et de transmission (8) transmet le mouvement à un arbre de transmission (26) qui est logé à l'intérieur du timon secondaire (7). L'arbre de transmission (26) est accouplé à l'arbre d'entrée (27) d'un carter intermédiaire (28) qui s'étend au niveau de la liaison du timon secondaire (7) au châssis (14). Ce carter intermédiaire (28) (figure 2) se compose de deux parties : une partie supérieure (29) solidaire du timon secondaire (7) et une partie inférieure (30) solidaire du châssis (14). La partie supérieure (29) supporte d'une part l'arbre d'entrée (27) et d'autre part un arbre de sortie intermédiaire (31). Ces deux arbres (27, 31) sont accouplés au moyen d'un couple de roues dentées coniques (32) logé dans la partie supérieure (29). La partie inférieure (30), quant-à-elle, supporte d'une part un arbre d'entrée intermédiaire (33) et d'autre part un arbre de sortie (34). Les deux arbres (33, 34) sont liés en rotation au moyen d'un couple de roues dentées coniques (35) logé dans la partie inférieure (30). Par ailleurs, l'arbre de sortie intermédiaire (31) et l'arbre d'entrée intermédiaire (33) sont accouplés l'un à l'autre au moyen d'un joint universel (36). Enfin, ces deux arbres intermédiaires (31, 33) sont agencés de telle manière que leurs axes de rotation respectifs soient confondus avec l'axe géométrique (10) de l'articulation (9) par l'intermédiaire de laquelle le timon (4) est lié au châssis (14) du corps (3). Cette articulation (9) est réalisée de la manière suivante. A son extrémité arrière, le timon secondaire (7) est muni d'un moyeu (37) centré sur l'axe géométrique (10) et s'étendant vers le bas. Ce moyeu (37) est guidé en rotation dans un palier (38) également centré sur l'axe géométrique (10) et solidaire du châssis (14). Le guidage en rotation du moyeu (37) dans le palier (38) de même que la liaison axiale dudit moyeu (37) et dudit palier (38) n'ont pas été détaillés, car ceux-ci sont à la portée de l'homme de l'art. L'arbre de sortie (34) de la partie inférieure (30) du carter intermédiaire (28) attaque l'arbre d'entrée (39) du carter d'entrée (40) du mécanisme de récolte (19) au moyen d'un arbre de transmission télescopique à joints universels (41).

Sur la figure 1 apparaît également très précisément la forme du chassis (14). Celui-ci se compose pour l'essentiel d'un élément médian (42) et de deux éléments latéraux (43, 44) s'étendant chacun d'un côté respectif dudit élément médian (42). L'élément médian (42) se compose principalement du palier (38) et d'une console (45) qui s'étend vers l'avant au moins sensiblement horizontalement et au moins sensiblement suivant la direction d'avance (12) au travail. Ladite console (45) est avantageusement liée rigidement, mais néanmoins de manière amovible, au palier (38). Les éléments latéraux (43, 44), quant-à-eux, sont chacun constitués par une poutre (46) s'étendant au moins sensiblement horizontalement et transversalement à la direction d'avance (12) au travail. A l'extrémité extérieure de chaque poutre (46), c'est-à-dire l'extrémité éloignée du palier (38), est fixée une jambe (47) s'étendant vers le bas. C'est à l'extrémité inférieure de cette jambe (47) qu'est lié le bras de roue (16) de la roue (15) correspondante. Chaque élément latéral (43, 44) est également lié rigidement et de manière amovible au palier (38).

Sur les figures 1 et 2, il apparaît par ailleurs que le mécanisme de récolte (19) s'étend transversalement à la direction d'avance (12) au travail, de même que sous la console (45) de l'élément médian (42) du châssis (14), à l'extrémité frontale de laquelle il est lié au moyen du dispositif de suspension (22).

La structure de ce dispositif de suspension (22) apparaît en détail sur les figures 2 à 6.

Il comporte un premier organe de suspension (48) lié d'une part à la console (45) du châssis (14) au moyen d'une première articulation (49) du type rotule, et d'autre part à une traverse (50) du mécanisme de récolte (19) au moyen d'une deuxième articulation (51) également du type rotule. Comme visible sur la figure 2 notamment, cette deuxième articulation (51) s'étend plus bas et, compte tenu du sens d'avance (12) au travail, plus en arrière que la première articulation (49).

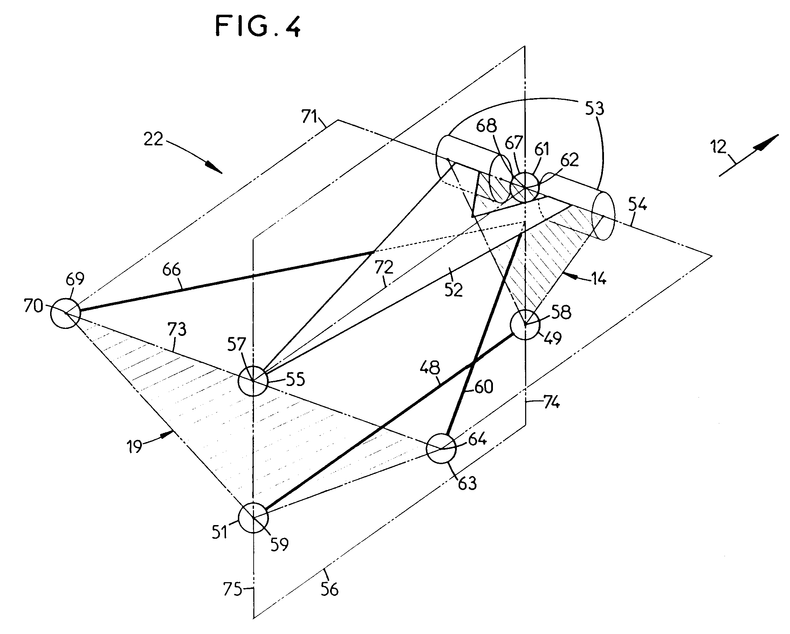

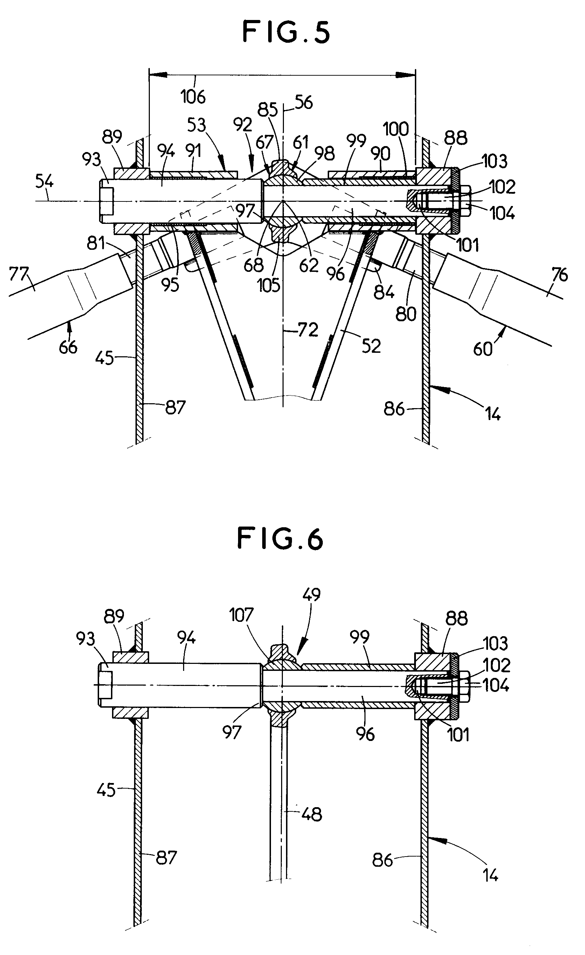

Le dispositif de suspension (22) comporte encore un deuxième organe de suspension (52) lié à la console (45) du châssis (14) au moyen d'une première articulation (53) du type cylindrique d'axe géométrique (54). Tel qu'il apparaît sur la figure 5, cette première articulation (53) est même du type pivot, c'est-à-dire une articulation cylindrique dont la translation le long de son axe géométrique est condamnée. Ce deuxième organe de suspension (52) est, par ailleurs, lié au carter d'entrée (40) du mécanisme de récolte (19) au moyen d'une deuxième articulation (55) du type rotule, qui s'étend, comme visible sur la figure 2, plus bas, et compte tenu du sens d'avance (12) au travail, plus en arrière que la première articulation (53). Ce deuxième organe de suspension (52) est agencé de telle sorte qu'un premier plan (56) (figure 4) passant par le centre (57) de sa deuxième articulation (55) et orthogonal à l'axe géométrique (54) de sa première articulation (53), contienne au moins sensiblement le centre (58) de la première articulation (49) du premier organe de suspension (48) et soit au moins sensiblement vertical. L'axe géométrique (54) de la première articulation (53) du deuxième organe de suspension (52) est agencé de telle sorte qu'au travail le premier plan (56) soit au moins sensiblement dirigé suivant la direction d'avance (12) au travail. Ici, il est même au moins sensiblement confondu avec le plan médian (11) du corps (3), respectivement du mécanisme de récolte (19). Ce deuxième organe de suspension (52) est, par ailleurs également agencé de telle sorte que sa première articulation (53) s'étende plus haut et, compte tenu du sens d'avance (12) au travail, plus en arrière que la première articulation (49) du premier organe de suspension (48). Le deuxième organe de suspension (52) s'étend ainsi plus haut que le premier organe de suspension (48). Ce premier organe de suspension (48) est, par ailleurs, agencé de telle sorte que, lorsque le mécanisme de récolte (19) repose sur un sol (109) horizontal, le centre (59) de sa deuxième articulation (51) s'étende au moins sensiblement dans le premier plan (56). Du reste, les premières articulations (49 ; 53) et les deuxièmes articulations (51 ; 55) des deux organes de suspension (48 ; 52) sont agencées de telle sorte que ces deux organes de suspension (48 ; 52) forment avec le châssis (14) et le mécanisme de récolte (19) au moins sensiblement un parallélogramme déformable notamment dans le premier plan (56). Comme par ailleurs les premières articulations (49 ; 53) s'étendent, compte tenu du sens d'avance (12) au travail, plus en avant que les deuxièmes articulations (51 ; 55), ledit parallélogramme déformable est tiré, ce qui permet au mécanisme de récolte (19) de bien passer par-dessus les obstacles.

Le dispositif de suspension (22) comporte ensuite un premier organe de suspension latéral (60) lié à la console (45) du châssis (14) au moyen d'une première articulation (61) du type rotule dont le centre (62) est au moins sensiblement situé sur l'axe géométrique (54) de la première articulation (53) du deuxième organe de suspension (52), ainsi qu'au moins sensiblement dans le premier plan (56). Ce premier organe de suspension latéral (60) est, par ailleurs, lié au mécanisme de récolte (19) au moyen d'une deuxième articulation (63) du type rotule à centre (64).

Le dispositif de suspension (22) comporte ensuite encore un deuxième organe de suspension latéral (66) lié à la console (45) du châssis (14) au moyen d'une première articulation (67) du type rotule dont le centre (68) est au moins sensiblement situé sur l'axe géométrique (54) de la première articulation (53) du deuxième organe de suspension (52), ainsi qu'au moins sensiblement dans le premier plan (56). Dans l'exemple préférentiel représenté, on voit en fait que le centre (68) de la première articulation (67) du deuxième organe de suspension latéral (66) est confondu avec le centre (62) de la première articulation (61) du premier organe de suspension latéral (60). Ce deuxième organe de suspension latéral (66) est, par ailleurs, lié au mécanisme de récolte (19) au moyen d'une deuxième articulation (69) du type rotule à centre (70).

Les deux organes de suspension latéraux (60, 66) sont agencés de telle manière que les centres (64, 70) de leurs deuxièmes articulations (63, 69), le centre (57) de la deuxième articulation (55) du deuxième organe de suspension (52) et les centres confondus (62, 68) des premières articulations (61, 67) des deux organes de suspension latéraux (60, 66) sont au moins sensiblement situés dans un deuxième plan (71) qui coupe le premier plan (56) suivant une première droite (72) passant par le centre (57) de la deuxième articulation (55) du deuxième organe de suspension (52) et les centres au moins sensiblement confondus (62, 68) des premières articulations (61, 67) des deux organes de suspension latéraux (60, 66). Ces deux organes de suspension latéraux (60, 66) sont au moins sensiblement symétriques par rapport à cette première droite (72). Du reste, les centres (64, 70) des deuxièmes articulations (63, 69) des deux organes de suspension latéraux (60, 66) et le centre (57) de la deuxième articulation (55) du deuxième organe de suspension (52) sont au moins sensiblement situés sur une deuxième droite (73) qui reste toujours au moins sensiblement orthogonale à la première droite (72). Lorsque le mécanisme de récolte (19) repose sur un sol (109) horizontal, le deuxième plan (71) est au moins sensiblement orthogonal au premier plan (56). Dans cette position, la deuxième droite (73) s'étend donc également au moins sensiblement parallèlement à l'axe géométrique (54) de la première articulation (53) du deuxième organe de suspension (52).

Sur la figure 1, il apparaît encore que la deuxième articulation (63) du premier organe de suspension latéral (60) s'étend - faucheuse (1) vue de l'arrière dans le sens d'avance (12) au travail - sensiblement dans la partie médiane de la partie du mécanisme de récolte (19) s'étendant du même côté du plan médian (11) que ledit premier organe de suspension latéral (60). En d'autres termes, la deuxième articulation (63) du premier organe de suspension latéral (60) s'étend à une distance du plan médian (11) sensiblement égale au quart de la largeur de travail (65) du mécanisme de récolte (19). De même, il apparaît que la deuxième articulation (69) du deuxième organe de suspension latéral (66) s'étend également - faucheuse (1) vue de l'arrière dans le sens d'avance (12) au travail - sensiblement dans la partie médiane de la partie du mécanisme de récolte (19) s'étendant du même côté du plan médian (11) que ledit deuxième organe de suspension latéral (66).

Le dispositif de suspension (22) qui vient d'être décrit, fonctionne de la manière suivante.

Le mécanisme de récolte (19) peut se déplacer vers le haut et vers le bas par rapport au chassis (14) par déformation du parallélogramme déformable que forment les deux organes de suspension (48, 52) avec le chassis (14) et le mécanisme de récolte (19).

Le mécanisme de récolte (19) peut ensuite pivoter autour de la première droite (72).

Le mécanisme de récolte (19) ne peut par contre pas pivoter autour de la droite (74) passant par le centre (58) de la première articulation (49) du premier organe de suspenion (48) et les centres confondus (62, 68) des premières articulations (61, 67) des deux organes de suspension latéraux (60, 66). Ce pivotement est en effet condamné par la première articulation (53) du deuxième organe de suspension (52), étant donné que celle-ci est du type cylindrique ou pivot. Cette première articulation (53) du deuxième organe de suspension (52) est donc un moyen empêchant le déplacement du mécanisme de récolte (19) transversalement à la direction d'avance (12) au travail.

Le mécanisme de récolte (19) ne peut enfin pas non plus pivoter autour de la droite (75) passant par les centres (59, 57) des deuxièmes articulations (51, 55) des deux organes de suspension (48, 52). Ce pivotement est en effet condamné par les deux organes de suspension latéraux (60, 66).

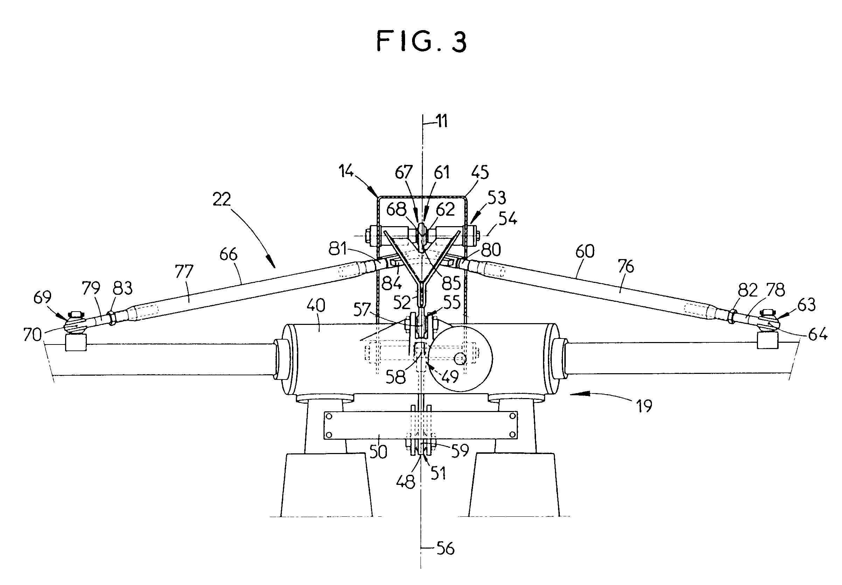

Les deux organes de suspension (48, 52) et les deux organes de suspension latéraux (60, 66), constituant le dispositif de suspension (22), sont formés chacun par une bielle rigide. Sur la figure 3 notamment, il apparaît par ailleurs que les deux organes de suspension latéraux (60, 66) comportent chacun notamment un corps (76, 77) dont l'une des extrémités est munie d'un trou fileté longitudinal ayant un pas à droite et dont l'autre extrémité est munie d'un trou fileté longitudinal ayant un pas à gauche. Dans l'un de ces trous filetés est vissée une tige filetée adéquate (78, 79), tandis que dans l'autre trou fileté est également vissée une tige filetée adéquate (80, 81). En tournant ainsi le corps (76, 77) dans un sens ou dans l'autre, on allonge ou on rétrécit la longueur de l'organe de suspension latéral (60, 66). Lorsque la longueur désirée est atteinte, on condamne la rotation du corps (76, 77) par rapport aux tiges filetées (78, 80, 79, 81) au moyen d'un écrou (82, 83) vissé sur la tige filetée (78, 79) jusqu'à buter contre l'extrémité correspondante du corps (76, 77). Grâce à ces moyens, il est possible de régler correctement la longueur de chaque organe de suspension latéral (60, 66). Grâce à ces moyens, il est également possible de mettre chaque organe de suspension latéral (60, 66) sous précontrainte.

Comme dit ci-avant, la première articulation (61) du premier organe de suspension latéral (60) et la première articulation (67) du deuxième organe de suspension latéral (66) sont confondues. A cet effet, les tiges filetées (80, 81) de ces organes de suspension latéraux (60, 66) sont liées rigidement l'une à l'autre au moyen d'une plaque de liaison (84) qui s'étend sous la première articulation (53) du deuxième organe de suspension (52). Dans sa partie médiane, ladite plaque de liaison (84) est munie d'une rotule (85) destinée à former à la fois la première articulation (61) du premier organe de suspension latéral (60) et la première articulation (67) du deuxième organe de suspension latéral (66).

L'agencement particulier de la première articulation (53) du deuxième organe de suspension (52), de la première articulation (61) du premier organe de suspension latéral (60) et de la première articulation (67) du deuxième organe de suspension latéral (66) apparaît en détail sur la figure 5.

Dans chacune des deux ailes (86, 87) de la console (45) du châssis (14) est soudée une bague (88, 89), de telle sorte que ces deux bagues (88, 89) définissent l'axe géométrique (54) de la première articulation (53) du deuxième organe de suspension (52). Celui-ci, quant-à-lui, comporte deux portées cylindriques (90, 91) s'étendant au moins sensiblement symétriquement par rapport au premier plan (56) et entre lesquelles est prévu un certain espace (92) permettant à la rotule (85) de s'étendre entre lesdites portées cylindriques (90, 91). Un tourillon (93) comporte une première partie (94) ayant un diamètre correspondant au diamètre intérieur de la bague (89) de l'aile (87) de la console (45) et dans laquelle ladite première partie (94) est logée. Du reste, cette première partie (94) traverse également la portée cylindrique (91) du deuxième organe de suspension (52), qui est guidée en rotation sur ladite première partie (94) au moyen d'une bague de guidage (95). Le tourillon (93) comporte ensuite une deuxième partie (96) d'un diamètre inférieur au diamètre de la première partie (94), de sorte à former un épaulement (97) s'étendant dans l'espace (92) prévu entre les deux portées cylindriques (90, 91) du deuxième organe de suspension (52). Le diamètre de la deuxième partie (96) correspond au diamètre intérieur de la bague (88) de l'aile (86) de la console (45), dans laquelle ladite deuxième partie (96) est logée. Le diamètre de la deuxième partie (96) correspond également au diamètre intérieur de la sphère (98) de la rotule (85). La sphère (98) de la rotule (85) est montée sur la deuxième partie (96) de sorte à s'étendre entre l'épaulement (97) et un fourreau (99) glissé sur la deuxième partie (96) et s'étendant entre ladite sphère (98) et la bague (88). Le diamètre extérieur de ce fourreau (99) correspond au diamètre de la première partie (94) du tourillon (93). Ce fourreau (99) traverse en sus la portée cylindrique (90) qui est guidée en rotation sur ledit fourreau (99) au moyen d'une bague de guidage (100). Dans l'extrémité de la deuxième partie (96) du tourillon (93), qui est logée dans la bague (88), est réalisé un trou fileté (101) suivant l'axe longitudinal du tourillon (93). Dans ce trou fileté (101) est vissée une vis (102) qui traverse également une rondelle d'appui (103) s'étendant entre la tête (104) de la vis (102) et la bague (88). En serrant la vis (102), la rondelle d'appui (103) prend appui sur la bague (88), ce qui a pour effet de déplacer le tourillon (93) en direction de ladite bague (88). Le déplacement du tourillon (93) sera stoppé lorsque l'épaulement (97) bute sur la sphère (98) qui bute sur le fourreau (99) qui bute sur la bague (88). La sphère (98) est ainsi bloquée et le corps (105) de la rotule (85) peut pivoter sur celle-ci en vue de la formation des premières articulations (61, 67) des deux organes de suspension latéraux (60, 66). La distance extérieure entre les deux portées cylindriques (90, 91) est quelque peu inférieure à la distance interne (106) entre les deux bagues (88, 89). De cette sorte, lesdites portées cylindriques (90, 91) peuvent pivoter sur la première partie (94) du tourillon (93), respectivement sur le fourreau (99), en vue de la formation de la première articulation (53) du deuxième organe de suspension (52).

L'agencement de la première articulation (49) du premier organe de suspension (48) apparaît en détail sur la figure 6. Il est cependant inutile de le décrire, étant donné que la rotule (107), destinée à former ladite première articulation (49), est montée de la même manière que la rotule (85) formant les premières articulations (61, 67) des deux organes de suspension latéraux (60, 66), montage qui a été décrit ci-avant.

Tel que visible sur la figure 2, la faucheuse (1) comporte encore un dispositif de relevage (110) du mécanisme de récolte (19). Ce dispositif se compose d'un vérin hydraulique (111) dont le cylindre (112) est lié au châssis (14) et dont la tige (113) est liée à une chaîne (114). Cette chaîne (114) s'enroule partiellement sur une roue (115) guidée en rotation dans le châssis (14), et est liée à son extrémité éloignée du vérin hydraulique (111) au deuxième organe de suspension (52). Au travail, ce dispositif de relevage (110) ne gêne pas le déplacement du mécanisme de récolte (19) par rapport au châssis (14). Lorsque le mécanisme de récolte (19) doit être relevé, il suffira de faire rentrer la tige (113) dans le corps (112) du vérin hydraulique (111) en injectant du fluide dans celui-ci. Ce faisant, la tige (113) tire, via la chaîne (114), sur le deuxième organe de suspension (52), ce qui a pour effet de faire monter le mécanisme de récolte (19) par déformation du parallélogramme déformable.

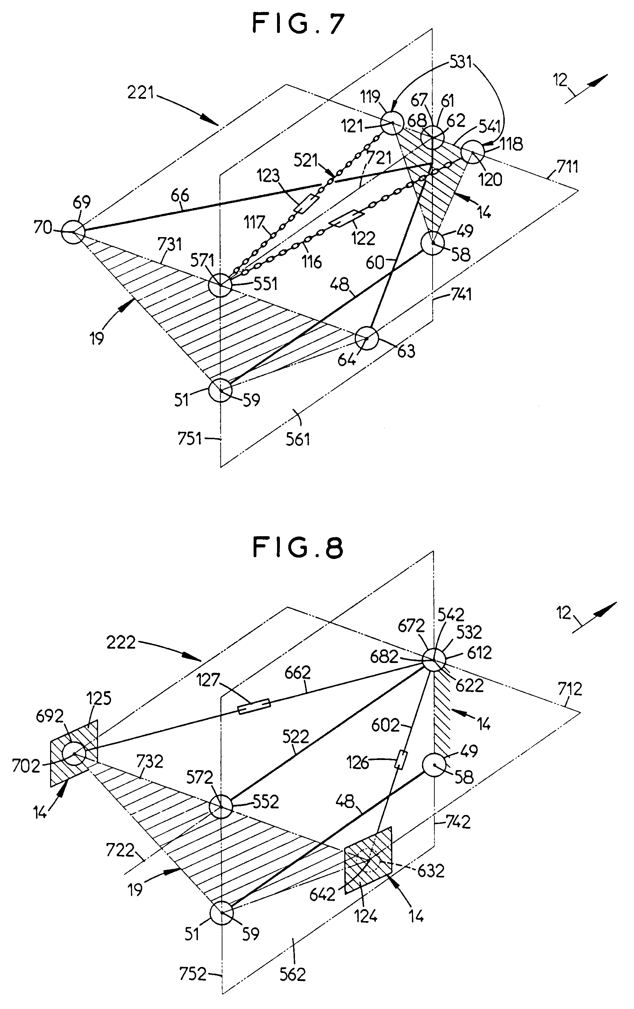

La figure 7 représente schématiquement un autre exemple de réalisation d'un dispositif de suspension (221).

Celui-ci comporte un premier organe de suspension (48) identique au premier organe de suspension (48) du dispositif de suspension (22).

Il comporte ensuite un deuxième organe de suspension (521). Ce dernier est constitué par deux éléments (116, 117) dont chacun est lié au châssis (14) par une première articulation (118, 119) du type rotule et qui sont liés au mécanisme de récolte (19) au moyen d'une deuxième articulation commune (551) du type rotule. Les deux premières articulations (118, 119) des deux éléments (116, 117) forment la première articulation (531) par l'intermédiaire de laquelle le deuxième organe de suspension (521) est lié au châssis (14). Cette première articulation (531) est équivalente à une articulation du type pivot, dont l'axe (541) est constitué par la droite passant par les centres (120, 121) des premières articulations (118, 119) des deux éléments (116, 117). Ce deuxième organe de suspension (521) est agencé de telle sorte qu'un premier plan (561), passant par le centre (571) de sa deuxième articulation (551) et orthogonal à l'axe géométrique (541) de sa première articulation (531), contienne au moins sensiblement le centre (58) de la première articulation (49) du premier organe de suspension (48) et soit au moins sensiblement vertical. Ce premier plan (561) constitue par ailleurs au moins sensiblement le plan bissecteur de l'angle formé par les deux éléments (116, 117) du deuxième organe de suspension (521).

L'axe géométrique (541) de la première articulation (531) du deuxième organe de suspension (521) peut être agencé de telle sorte qu'au travail, le premier plan (561) soit au moins sensiblement dirigé suivant la direction d'avance (12) au travail. Il peut aussi être prévu que le premier plan (561) soit au moins sensiblement confondu avec le plan médian (11). Du reste, le premier organe de suspension (48) est agencé de telle sorte que lorsque le mécanisme de récolte (19) repose sur un sol (109) horizontal, le centre (59) de sa deuxième articulation (51) s'étende au moins sensiblement dans le premier plan (561).

La position relative entre les premières articulations (49, 531) et les deuxièmes articulations (51, 551) des deux organes de suspension (48, 521) est semblable à celle des premières articulations (49, 53) et des deuxièmes articulations (51, 55) des deux organes de suspension (48, 52) du dispositif de suspension (22). Ainsi, les deux organes de suspension (48, 521) forment également avec le châssis (14) et le mécanisme de récolte (19) au moins sensiblement un parallélogramme tiré.

Le dispositif de suspension (221) comporte encore deux organes de suspension latéraux (60, 66) identiques à ceux du dispositif de suspension (22). Les centres confondus (62, 68) de leurs premières articulations (61, 67) sont au moins sensiblement situés sur l'axe géométrique (541), ainsi qu'au moins sensiblement dans le premier plan (561). Du reste, les centres (64, 70) de leurs deuxièmes articulations (63, 69), le centre (571) de la deuxième articulation (551) du deuxième organe de suspension (521) et les centres confondus (62, 68) des premières articulations (61, 67) des deux organes de suspension latéraux (60, 66) sont au moins sensiblement situés dans un deuxième plan (711) qui coupe le premier plan (561) suivant une première droite (721) passant par le centre (571) de la deuxième articulation (551) du deuxième organe de suspension (521) et les centres au moins sensiblement confondus (62, 68) des premières articulations (61, 67) des deux organes de suspension latéraux (60, 66). Ces derniers sont au moins sensiblement symétriques par rapport à cette première droite (721). Du reste, les centres (64, 70) des deuxièmes articulations (63, 69) des deux organes de suspension latéraux (60, 66) et le centre (571) de la deuxième articulation (551) du deuxième organe de suspension (521) sont au moins sensiblement situés sur une deuxième droite (731) qui reste toujours au moins sensiblement orthogonale à la première droite (721). Lorsque le mécanisme de récolte (19) repose sur un sol (109) horizontal, le deuxième plan (711) est au moins sensiblement orthogonal au premier plan (561). Dans cette position, la deuxième droite (731) s'étend donc également au moins sensiblement parallèlement à l'axe géométrique (541) de la première articulation (531) du deuxième organe de suspension (521).

Dans cet exemple, il est par ailleurs prévu que la position relative des deuxièmes articulations (63, 69) des deux organes de suspension latéraux (60, 66) sur le mécanisme de récolte (19) soit semblable à celle des deuxièmes articulations (63, 69) des deux organes de suspension latéraux (60, 66) du dispositif de suspension (22).

Il est du reste prévu que les deux éléments (116, 117) du deuxième organe de suspension (521) soient formés chacun par une chaîne. Ceux-ci sont également chacun munis d'un organe de réglage (122, 123) de la distance séparant le centre (120, 121) de leur première articulation (118, 119) et le centre (571) de leur deuxième articulation (551) commune. Les organes de réglage (122, 123) servent principalement à mettre les éléments (116, 117) sous précontrainte.

Ce dispositif de suspension (221) fonctionne de la manière suivante.

Le mécanisme de récolte (19) peut se déplacer vers le haut et vers le bas par rapport au châssis (14) par déformation du parallélogramme déformable que forment les deux organes de suspension (48, 521) avec le châssis (14) et le mécanisme de récolte (19).

Le mécanisme de récolte (19) peut ensuite pivoter autour de la première droite (721).

Le mécanisme de récolte (19) ne peut par contre pas pivoter autour de la droite (741) passant par le centre (58) de la première articulation (49) du premier organe de suspension (48) et les centres confondus (62, 68) des premières articulations (61, 67) des deux organes de suspension latéraux (60, 66). Ce pivotement est en effet condamné par la première articulation (531) du deuxième organe de suspension (521), étant donné que celle-ci est du type pivot. Cette première articulation (531) est donc, comme la première articulation (53), un moyen empêchant le déplacement du mécanisme de récolte (19) dans une direction transversale à la direction d'avance (12) au travail.

Le mécanisme de récolte (19) ne peut enfin pas non plus pivoter autour de la droite (751) passant par les centres (59, 571) des deuxièmes articulations (51, 551) des deux organes de suspension (48, 521). Ce pivotement est en effet condamné par les deux organes de suspension latéraux (60, 66).

La figure 8 représente schématiquement un autre exemple de réalisation d'un dispositif de suspension (222).

Celui-ci comporte tout d'abord un premier organe de suspension (48) identique à celui du dispositif de suspension (22).

Il comporte ensuite un deuxième organe de suspension (522) lié d'une part au chassis (14) au moyen d'une première articulation (532) du type rotule et d'autre part au mécanisme de récolte (19) au moyen d'une deuxième articulation (552) également du type rotule. Ce deuxième organe de suspension (522) est agencé de telle sorte que le centre (542) de sa première articulation (532) et le centre (572) de sa deuxième articulation (552) soient situés dans un premier plan (562) au moins sensiblement vertical et passant par le centre (58) de la première articulation (49) du premier organe de suspension (48). Ce premier organe de suspension (48) est par ailleurs agencé de telle sorte que lorsque le mécanisme de récolte (19) repose sur un sol (109) horizontal, le centre (59) de sa deuxième articulation (51) s'étende au moins sensiblement dans le premier plan (562).

La position relative entre les premières articulations (49, 532) et les deuxièmes articulations (51, 552) des deux organes de suspension (48, 522) est semblable à celle des premières articulations (49, 53) et des deuxièmes articulations (51, 55) des deux organes de suspension (48, 52) du dispositif de suspension (22). Ainsi les deux organes de suspension (48, 522) forment également avec le châssis (14) et le mécanisme de récolte (19) au moins sensiblement un parallélogramme déformable tiré.

Le dispositif de suspension (222) comporte ensuite un premier organe de suspension latéral (602) lié d'une part au châssis (14) au moyen d'une première articulation (612) du type rotule, dont le centre (622) est au moins sensiblement confondu avec le centre (542) de la première articulation (532) du deuxième organe de suspension (522), et d'autre part au mécanisme de récolte (19), au moyen d'une deuxième articulation (632) également du type rotule.

Le dispositif de suspension (222) comporte ensuite encore un deuxième organe de suspension latéral (662) lié au châssis (14) au moyen d'une première articulation (672) du type rotule, dont le centre (682) est également au moins sensiblement confondu avec le centre (542) de la première articulation (532) du deuxième organe de suspension (522). Ce deuxième organe de suspension latéral (662) est d'autre part lié au mécanisme de récolte (19) au moyen d'une deuxième articulation (692) également du type rotule.

Dans l'exemple représenté, on voit en fait que le centre (542) de la première articulation (532) du deuxième organe de suspension (522) et les centres (622, 682) des premières articulations (612, 672) des deux organes de suspension latéraux (602, 662) sont confondus. Du reste, les centres (642, 702) des deuxièmes articulations (632, 692) des deux organes de suspension latéraux (602, 662), le centre (572) de la deuxième articulation (552) du deuxième organe de suspension (522) et les centres confondus (622, 682, 542) des premières articulations (612, 672, 532) des deux organes de suspension latéraux (602, 662) et du deuxième organe de suspension (522) sont au moins sensiblement situés dans un deuxième plan (712) qui coupe le premier plan (562) suivant une première droite (722) passant par le centre (572) de la deuxième articulation (552) du deuxième organe de suspension (522) et les centres au moins sensiblement confondus (622, 682, 542) des premières articulations (612, 672, 532) des deux organes de suspension latéraux (602, 662), respectivement du deuxième organe de suspension (522). Les deux organes de suspension latéraux (602, 662) sont au moins sensiblement symétriques par rapport à cette première droite (722). Du reste, les centres (642, 702) des deuxièmes articulations (632, 692) des deux organes de suspension latéraux (602, 662) et le centre (572) de la deuxième articulation (552) du deuxième organe de suspension (522) sont au moins sensiblement situés sur une deuxième droite (732) qui reste toujours au moins sensiblement orthogonale à la première droite (722). Lorsque le mécanisme de récolte (19) repose sur un sol (109) horizontal, le deuxième plan (712) est au moins sensiblement orthogonal au premier plan (562).

La position du plan (562) par rapport à la direction d'avance (12) au travail est définie par des butées (124, 125) solidaires du châssis (14) et agissant sur l'ensemble formé par le deuxième organe de suspension (522) et les deux organes de suspension latéraux (602, 662) ou sur le mécanisme de récolte (19). Ces butées (124, 125) peuvent être agencées de telle sorte qu'au travail le premier plan (562) soit au moins sensiblement dirigé suivant la direction d'avance (12) au travail. Il peut aussi être prévu que le premier plan (562) soit, comme le premier plan (56) du dispositif de suspension (22), au moins sensiblement confondu avec le plan médian (11).

Dans cet exemple, il est par ailleurs prévu que le deuxième organe de suspension (522) soit également formé par une bielle rigide. Les deux organes de suspension latéraux (602, 662), par contre, sont formés chacun par un câble. Il apparaît, du reste, que ces organes de suspension latéraux (602, 662) sont munis chacun d'un organe de réglage (126, 127) de la distance séparant le centre (622, 682) de leur première articulation (612, 672) et le centre (642, 702) de leur deuxième articulation (632, 692). Ces organes de réglage (126, 127) servent notamment à mettre les organes de suspension latéraux (602, 662) sous précontrainte.

Dans cet exemple, il est enfin encore prévu que la position relative des deuxièmes articulations (632, 692) des deux organes de suspension latéraux (602, 662) sur le mécanisme de récolte (19) soit semblable à celle des deuxièmes articulations (63, 69) des deux organes de suspension latéraux (60, 66) du dispositif de suspension (22).

Ce dispositif de suspension (222) fonctionne de la manière suivante.

Le mécanisme de récolte (19) peut se déplacer vers le haut et vers le bas par rapport au châssis (14) par déformation du parallélogramme déformable que forment les deux organes de suspension (48, 522) avec le châssis (14) et le mécanisme de récolte (19).

Le mécanisme de récolte (19) peut ensuite pivoter autour de la première droite (722).

Le mécanisme de récolte (19) ne peut par contre pas pivoter ou tout au moins dans une certaine limite prédéterminée autour de la droite (742) passant par le centre (58) de la première articulation (49) du premier organe de suspension (48) et les centres confondus (542, 622, 682) des premières articulations (532, 612, 672) du deuxième organe de suspension (522) et des deux organes de suspension latéraux (602, 662). Ce pivotement est en effet condamné ou du moins limité par les butées (124, 125) qui sont donc un moyen empêchant ou limitant le déplacement du mécanisme de récolte (19) dans une direction transversale à la direction d'avance (12) au travail.

Le mécanisme de récolte (19) ne peut enfin pas non plus pivoter autour de la droite (752) passant par les centres (59, 572) des deuxièmes articulations (51, 552) des deux organes de suspension (48, 522). Ce pivotement est en effet condamné par les deux organes de suspension latéraux (602, 662).

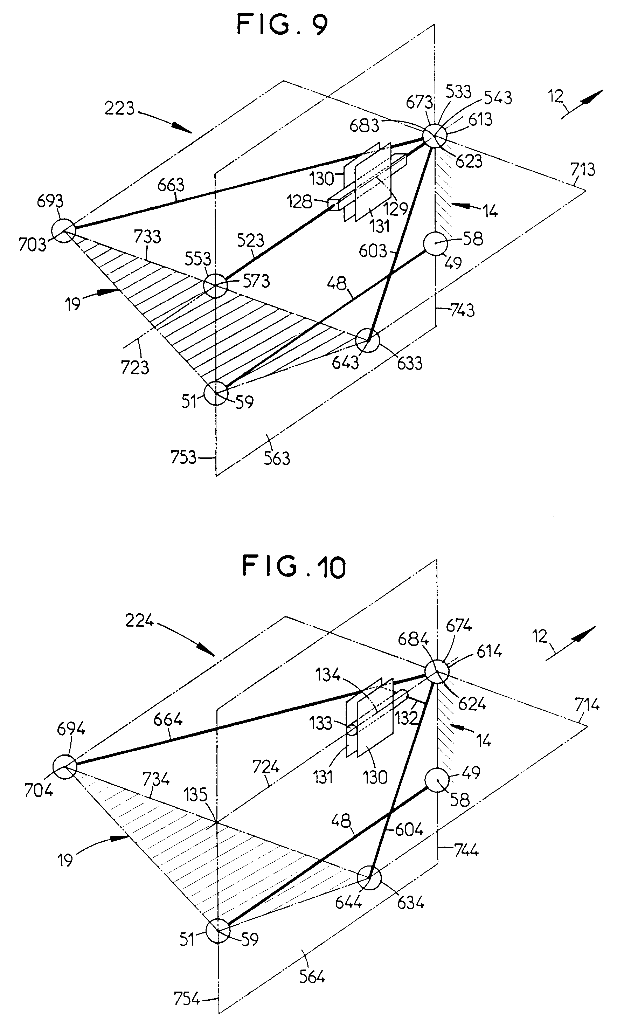

La figure 9 représente schématiquement un autre exemple de réalisation d'un dispositif de suspension (223).

Ce dispositif de suspension (223) comporte tout d'abord un organe de suspension (48) identique au premier organe de suspension (48) du dispositif de suspension (22).

Il comporte ensuite un deuxième organe de suspension (523) lié d'une part au châssis (14) au moyen d'une première articulation (533) du type rotule et d'autre part au mécanisme de récolte (19) au moyen d'une deuxième articulation (553) également du type rotule. Ce deuxième organe de suspension (523) est agencé de telle sorte que le centre (543) de sa première articulation (533) et le centre (573) de sa deuxième articulation (553) soient situés dans un premier plan (563) au moins sensiblement vertical et passant par le centre (58) de la première articulation (49) du premier organe de suspension (48). Ce premier organe de suspension (48) est par ailleurs agencé de telle sorte que lorsque le mécanisme de récolte (19) repose sur un sol (109) horizontal, le centre (59) de sa deuxième articulation (51) s'étende au moins sensiblement dans le premier plan (563).

La position relative entre les premières articulations (49, 553) et les deuxièmes articulations (51, 553) des deux organes de suspension (48, 523) est semblable à celle des premières articulations (49, 53) et des deuxièmes articulations (51, 55) des deux organes de suspension (48, 52) du dispositif de suspension (22). Ainsi les deux organes de suspension (48, 523) forment également avec le châssis (14) et le mécanisme de récolte (19) au moins sensiblement un parallélogramme déformable tiré.

Le dispositif de suspension (223) comporte ensuite un premier organe de suspension latéral (603) lié d'une part au châssis (14) au moyen d'une première articulation (613) du type rotule, dont le centre (623) est au moins sensiblement confondu avec le centre (543) de la première articulation (533) du deuxième organe de suspension (523), et d'autre part au mécanisme de récolte (19) au moyen d'une deuxième articulation (633) également du type rotule.

Le dispositif de suspension (223) comporte ensuite encore un deuxième organe de suspension latéral (663) lié au châssis (14) au moyen d'une première articulation (673) du type rotule, dont le centre (683) est également au moins sensiblement confondu avec le centre (543) de la première articulation (533) du deuxième organe de suspension (523). Ce deuxième organe de suspension latéral (663) est d'autre part lié au mécanisme de récolte (19) au moyen d'une deuxième articulation (693) également du type rotule.

Dans l'exemple représenté, on voit en fait que le centre (543) de la première articulation (533) du deuxième organe de suspension (523) et les centres (623, 683) des premières articulations (613, 673) des deux organes de suspension latéraux (603, 663) sont confondus. Du reste, les centres (643, 703) des deuxièmes articulations (633, 693) des deux organes de suspension latéraux (603, 663), le centre (573) de la deuxième articulation (553) du deuxième organe de suspension (523) et les centres confondus (623, 683, 543) des premières articulations (613, 673, 533) des deux organes de suspension latéraux (603, 663) et du deuxième organe de suspension (523) sont au moins sensiblement situés dans un deuxième plan (713) qui coupe le premier plan (563) suivant une première droite (723) passant par le centre (573) de la deuxième articulation (553) du deuxième organe de suspension (523) et les centres au moins sensiblement confondus (623, 683, 543) des premières articulations (613, 673, 533) des deux organes de suspension latéraux (603, 663), respectivement du deuxième organe de suspension (523). Les deux organes de suspension latéraux (603, 663) sont au moins sensiblement symétriques par rapport à cette première droite (723). Du reste, les centres (643, 703) des deuxièmes articulations (633, 693) des deux organes de suspension latéraux (603, 663) et le centre (573) de la deuxième articulation (553) du deuxième organe de suspension (523) sont au moins sensiblement situés sur une deuxième droite (733) qui reste toujours au moins sensiblement orthogonale à la première droite (723). Lorsque le mécanisme de récolte (19) repose sur un sol (109) horizontal, le deuxième plan (713) est au moins sensiblement orthogonal au premier plan (563).

Entre sa première articulation (533) et sa deuxième articulation (553) le deuxième organe de suspension (523) est muni d'un organe (128), de section au moins sensiblement carrée, qui s'étend pratiquement sans jeu entre deux surfaces de guidage (130, 131) solidaires du châssis (14). Ces deux surfaces de guidage (130, 131) sont au moins sensiblement planes et s'étendent au moins sensiblement parallèlement au premier plan (563). Elles permettent ainsi audit organe (128) de se déplacer dans le premier plan (563). Ces surfaces de guidage (130, 131) peuvent être agencées de telle sorte qu'au travail, le premier plan (563) soit au moins sensiblement dirigé suivant la direction d'avance (12) au travail. Il peut aussi être prévu que le premier plan (563) soit, comme le premier plan (56) du dispositif de suspension (22), au moins sensiblement confondu avec le plan médian (11).

Dans cet exemple, il est prévu que le deuxième organe de suspension (523) de même que les deux organes de suspension latéraux (603, 663) soient rigides. Bien que cela ne soit pas représenté, on comprendra que ces organes de suspension latéraux (603, 663) pourront comporter des organes de réglage semblables à ceux des organes de suspension latéraux (60, 66).

Dans cet exemple, il est enfin encore prévu que la position relative des deuxièmes articulations (633, 693) des deux organes de suspension latéraux (603, 663) sur le mécanisme de récolte (19) soit semblable à celle des deuxièmes articulations (63, 69) des deux organes de suspension latéraux (60, 66).

Ce dispositif de suspension (223) fonctionne de la manière suivante.

Le mécanisme de récolte (19) peut se déplacer vers le haut et vers le bas par rapport au châssis (14) par déformation du parallélogramme déformable que forment les deux organes de suspension (48, 523) avec le châssis (14) et le mécanisme de récolte (19).

Le mécanisme de récolte (19) peut ensuite pivoter autour de la première droite (723).

Le mécanisme de récolte (19) ne peut, par contre, pas pivoter ou tout au moins dans une certaine limite prédéterminée (s'il a été prévu un jeu entre l'organe(128) et les surfaces de guidage (130, 131)) autour de la droite (743) passant par le centre (58) de la première articulation (49) du premier organe de suspension (48) et les centres confondus (543, 623, 683) des premières articulations (533, 613, 673) du deuxième organe de suspension (523) et des deux organes de suspension latéraux (603, 663). Ce pivotement est en effet condamné ou du moins limité par l'organe (128) et les deux surfaces de guidage (130, 131) qui constituent donc un moyen empêchant ou limitant le déplacement du mécanisme de récolte (19) dans une direction transversale à la direction d'avance (12) au travail.

Le mécanisme de récolte (19) ne peut enfin pas non plus pivoter autour de la droite (753) passant par les centres (59, 573) des deuxièmes articulations (51, 553) des deux organes de suspension (48, 523). Ce pivotement est en effet condamné par les deux organes de suspension latéraux (603, 663).

La figure 10 représente schématiquement un autre exemple de réalisation d'un dispositif de suspension (224).

Ce dispositif de suspension (224) comporte tout d'abord un organe de suspension (48) identique au premier organe de suspension (48) du dispositif de suspension (22).

Le dispositif de suspension (224) comporte ensuite un premier organe de suspension latéral (604) lié d'une part au châssis (14) au moyen d'une première articulation (614) du type rotule et d'autre part au mécanisme de récolte (19) au moyen d'une deuxième articulation (634) également du type rotule.

Le dispositif de suspension (224) comporte ensuite encore un deuxième organe de suspension latéral (664) lié d'une part au chassis (14) au moyen d'une première articulation (674) du type rotule et d'autre part au mécanisme de récolte (19) au moyen d'une deuxième articulation (694) également du type rotule. Dans l'exemple représenté, on voit en fait que les centres (624, 684) des premières articulations (614, 674) des deux organes de suspension latéraux (604, 664) sont au moins sensiblement confondus. Près de ces dernières, les deux organes de suspension latéraux (604, 664) sont liés entre eux au moyen d'une traverse (132). Celle-ci porte un doigt cylindrique (133) dont l'axe longitudinal (134) passe au moins sensiblement par les centres au moins sensiblement confondus (624, 684) des premières articulations (614, 674) des deux organes de suspension latéraux (604, 664). L'axe longitudinal (134) de ce doigt cylindrique (133) forme ainsi avec le centre (58) de la première articulation (49) de l'organe de suspension (48) un premier plan (564) au moins sensiblement vertical. L'organe de suspension (48) est du reste agencé de telle sorte que lorsque le mécanisme de récolte (19) repose sur un sol (109) horizontal, le centre (59) de sa deuxième articulation (51) s'étende également au moins sensiblement dans le premier plan (564)

Du reste, les centres (644, 704) des deuxièmes articulations (634, 694) et les centres confondus (624, 684) des premières articulations (614, 674) des deux organes de suspension latéraux (604, 664) sont situés dans un deuxième plan (714) qui coupe le premier plan (564) suivant une première droite (724) au moins sensiblement confondue avec l'axe longitudinal (134) du doigt cylindrique (133). Les deux organes de suspension latéraux (604, 664) sont au moins sensiblement symétrique par rapport à cette première droite (724). Du reste, les centres (644, 704) des deuxièmes articulations (634, 694) des deux organes de suspension latéraux (604, 664) sont situés sur une deuxième droite (734) qui reste toujours au moins sensiblement orthogonale à la première droite (724). Lorsque le mécanisme de récolte (19) repose sur un sol (109) horizontal, le deuxième plan (714) est au moins sensiblement orthogonal au premier plan (564).

La position du premier plan (564) par rapport à la direction d'avance (12) au travail est définie par deux surfaces de guidage (130, 131) identiques à celle du dispositif de suspension (223) et entre lesquelles s'étend le doigt cylindrique (133). Celles-ci permettent donc audit doigt cylindrique (133) de se déplacer dans le plan (564) et de pivoter autour de son axe longitudinal (134), c'est-à-dire autour de la première droite (724). Ces surfaces de guidage (130, 131) peuvent être agencées de telle sorte qu'au travail, le premier plan (564) soit au moins sensiblement dirigé suivant la direction d'avance (12) au travail. Il peut aussi être prévu que le premier plan (564) soit, comme le premier plan (56) du dispositif de suspension (22), au moins sensiblement confondu avec le plan médian (11).

La position relative entre les premières articulations (49, 614, 674) et les deuxièmes articulations (51, 634, 694) de l'organe de suspension (48), respectivement des deux organes de suspension latéraux (604, 664), est identique à celle des premières articulations (49, 61, 67) et des deuxièmes articulations (51, 63, 69) de l'organe de suspension (48), respectivement des deux organes de suspension latéraux (60, 66) du dispositif de suspension (22). L'organe de suspension (48) et les deux organes de suspension latéraux (604, 664) forment ainsi avec le chassis (14) et le mécanisme de récolte (19) un parallélogramme tiré.

Dans cet exemple, il est prévu que les deux organes de suspension latéraux (604, 664) soient rigides. Bien que cela ne soit pas représenté, on comprendra que ces organes de suspension latéraux (604, 664) pourront comporter des organes de réglage semblables à ceux des organes de suspension latéraux (60, 66).

Le dispositif de suspension (224) fonctionne de la manière suivante.

Le mécanisme de récolte (19) peut se déplacer vers le haut et vers le bas par rapport au châssis (14) par déformation du parallélogramme déformable défini ci-avant.

Le mécanisme de récolte (19) peut ensuite pivoter autour de la première droite (724).

Le mécanisme de récolte (19) ne peut par contre pas pivoter ou tout au moins dans une certaine limite prédéterminée autour de la droite (744) passant par le centre (58) de la première articulation (49) de l'organe de suspension (48) et les centres confondus (624, 684) des premières articulations (614, 674) des deux organes de suspension latéraux (604, 664). Ce pivotement est en effet condamné ou du moins limité par le doigt cylindrique (133) et les deux surfaces de guidage (130, 131) qui constituent donc un moyen empêchant ou limitant le déplacement du mécanisme de récolte (19) dans une direction transversale à la direction d'avance (12) au travail.

Le mécanisme de récolte (19) ne peut pas non plus pivoter autour de la droite (754) passant par le centre (59) de la deuxième articulation (51) de l'organe de suspension (48) et le point d'intersection (135) de la première droite (724) et de la deuxième droite (734). Ce pivotement est en effet condamné par les deux organes de suspension latéraux (604, 664).

Différentes modifications restent possibles, notamment en ce qui concerne la constitution des divers éléments ou par substitution d'équivalents techniques, sans pour autant sortir du domaine de protection défini par les revendications.

C'est ainsi notamment que dans les divers exemples de réalisation décrits, il est parfaitement possible de prévoir plus de deux organes de suspension latéraux, dès lors que leurs premières articulations soient au moins sensiblement confondues et que leurs deuxièmes articulations soient au moins sensiblement situées sur la deuxième droite.

Dans les dispositifs de suspension (22 ; 223), il serait du reste parfaitement possible de ne prévoir qu'un seul organe de suspension latéral ou plusieurs organes de suspension latéraux s'étendant d'un même côté de la première droite (72 ; 723).

Dans les dispositifs de suspension (22 ; 223) l'un au moins des organes de suspension latéraux (60, 66 ; 603, 663) pourrait être remplacé par l'un des organes de suspension latéraux (602, 662) du dispositif de suspension (222) et vice versa.

Du reste, l'articulation (53) du deuxième organe de suspension (52) du dispositif de suspension (22) pourrait être remplacée par l'articulation (531) du deuxième organe de suspension (521) du dispositif de suspension (221) et vice versa.

## Revendications

1. Machine agricole (1) comportant au moins un groupe (19) d'organes de travail (20, 21) et une structure (4, 14) munie notamment d'un moyen d'attelage (4) permettant, lors de l'utilisation de ladite machine agricole (1), d'atteler celle-ci à un véhicule moteur (2), ledit groupe (19) d'organes de travail (20, 21) étant lié à ladite structure (4, 14) au moyen d'un dispositif de suspension (22 ; 221 ; 222 ; 223) comportant des moyens de suspension (48, 52, 60, 66 ; 48, 521, 60, 66 ; 48, 522, 602, 662 ; 48, 523, 603, 663) liés d'une part à la structure (4, 14) par des premières articulations (49, 53, 61, 67 ; 49, 531, 61, 67 ; 49, 532, 612, 672 ; 49, 533, 613, 673) et, d'autre part, au groupe (19) d'organes de travail (20, 21) par des deuxièmes articulations (51, 55, 63, 69 ; 51, 551, 63, 69 ; 51, 552, 632, 692 ; 51, 553, 633, 693), lesdits moyens de suspension (48, 52, 60, 66 ; 48, 521, 60, 66 ; 48, 522, 602, 662 ; 48, 523, 603, 663) comportant :
- un premier organe de suspension central (48) dont la première articulation (49) et la deuxième articulation (51) sont chacune du type rotule dont les centres (58, 59) définissent, lorsque le groupe (19) d'organes de travail (20, 21) est horizontal, un premier plan vertical (56 ; 561 ; 562 ; 563) dirigé vers l'avant durant le travail, et
- au moins un organe de suspension latéral (60, 66 ; 602, 662 ; 603, 663), dont l'axe (62, 68 ; 622, 682 ; 623, 683) de la première articulation (61, 67 ; 612, 672 ; 613, 673) et l'axe (64, 70 ; 642, 702 ; 643, 703) de la deuxième articulation (63, 69 ; 632, 692 ; 633, 693) définissent au moins sensiblement un deuxième plan (71 ; 711 ; 712 ; 713) au moins sensiblement orthogonal au premier plan (56 ; 561 ; 562 ; 563) lorsque le groupe (19) d'organes de travail (20, 21) est horizontal, et coupant le premier plan (56 ; 561 ; 562 ; 563) suivant une première droite (72 ; 721 ; 722 ; 723), ledit (lesdits) organe(s) de suspension latéral (latéraux) (60, 66 ; 602, 662 ; 603, 663) formant avec le premier organe de suspension central (48) un premier quadrilatère déformable dans une direction au moins sensiblement verticale, ladite deuxième articulation (63, 69 ; 632, 692 ; 633, 693) d'un organe de suspension latéral (60, 66 ; 602, 662 ; 603, 663) étant éloignée du premier plan (56 ; 561 ; 562 ; 563) et définissant une deuxième droite (73 ; 731 ; 732 ; 733) orthogonale à la première droite (72 ; 721 ; 722 ; 723),
caractérisée par le fait que lesdits moyens de suspension (48, 52, 60, 66 ; 48, 521, 60, 66 ; 48, 522, 602, 662 ; 48, 523, 603, 663) comportent en sus un deuxième organe de suspension central (52 ; 521 ; 522 ; 523) formant avec le premier organe de suspension central (48) un deuxième quadrilatère déformable dans une direction au moins sensiblement verticale équivalent au premier quadrilatère, et dont l'axe (54 ; 541 ; 542 ; 543) de la première articulation (53 ; 531 ; 532 ; 533) et l'axe (57 ; 571 ; 572 ; 573) de la deuxième articulation (55 ; 551 ; 552 ; 553) s'étendent au moins sensiblement dans le deuxième plan (71 ; 711 ; 712 ; 713), ladite deuxième articulation (55 ; 551 ; 552 ; 553) s'étendant en sus au moins sensiblement au niveau de la première droite (72 ; 721 ; 722 ; 723) et son axe (57 ; 571 ; 572 ; 573) ayant au moins sensiblement un point commun (57 ; 571 ; 572 ; 573) avec la première droite (72 ; 721 ; 722 ; 723) et avec la deuxième droite (73 ; 731 ; 732 ; 733), et que la première articulation (61,67 ; 612, 672 ; 613, 673) d'un organe de suspension latéral (60, 66 ; 602, 662 ; 603, 663) s'étend au moins sensiblement dans le premier plan (56 ; 561 ; 562 ; 563), son axe (62, 68 ; 622, 682 ; 623, 683) étant situé au moins sensiblement sur l'axe (54 ; 541 ; 542 ; 543) de la première articulation (53 ; 531 ; 532 ; 533) du deuxième organe de suspension central (52 ; 521 ; 522 ; 523).

2. Machine agricole (1) comportant au moins un groupe (19) d'organes de travail (20, 21) et une structure (4, 14) munie notamment d'un moyen d'attelage (4) permettant, lors de l'utilisation de ladite machine agricole (1), d'atteler celle-ci à un véhicule moteur (2), ledit groupe (19) d'organes de travail (20, 21) étant lié à ladite structure (4, 14) au moyen d'un dispositif de suspension (224) comportant des moyens de suspension (48, 604, 664) liés d'une part à la structure (4, 14) par des premières articulations (49, 614, 674) et, d'autre part, au groupe (19) d'organes de travail (20, 21) par des deuxièmes articulations (51, 634, 694), lesdits moyens de suspension (48, 604, 664) comportant :
- un organe de suspension central (48) rigide dont la première articulation (49) et la deuxième articulation (51) sont chacune du type rotule dont les centres (58, 59) définissent, lorsque le groupe (19) d'organes de travail (20, 21) est horizontal, un premier plan vertical (564) dirigé vers l'avant durant le travail, et
- au moins deux organes de suspension latéraux (604, 664) rigides dont les axes (624, 684) des premières articulations (614, 674) et les axes (644, 704) des deuxièmes articulations (634, 694) définissent au moins sensiblement un deuxième plan (714) au moins sensiblement orthogonal au premier plan (564) lorsque le groupe (19) d'organes de travail (20, 21) est horizontal, et coupant le premier plan (564) suivant une première droite (724), lesdits organes de suspension latéraux (604, 664) formant avec l'organe de suspension central (48) un quadrilatère déformable dans une direction au moins sensiblement verticale, lesdites deuxièmes articulations (634, 694) des organes de suspension latéraux (604, 664) étant éloignées du premier plan (564) et définissant une deuxième droite (734) orthogonale à la première droite (724),
caractérisée par le fait que les premières articulations (614, 674) des organes de suspension latéraux (604, 674) s'étendent au moins sensiblement dans le premier plan (564), leurs axes (624, 684) étant au moins sensiblement confondus.

3. Machine agricole selon la revendication 1 ou 2, caractérisée par le fait que le groupe (19) d'organes de travail (20, 21) présente un plan médian (11) vertical et que le premier plan (56 ; 561 ; 562 ; 563 ; 564) est au moins sensiblement confondu avec ledit plan médian (11).

4. Machine agricole selon l'une au moins des revendications 1 à 3, caractérisée par le fait que le premier plan (56 ; 561 ; 562 ; 563 ; 564) s'étend, en travail normal, au moins sensiblement suivant la direction d'avance (12) au travail.

5. Machine agricole selon l'une au moins des revendications 1 à 4, caractérisée par le fait que le premier et le deuxième quadrilatère déformable sont tirés au travail.

6. Machine agricole selon l'une au moins des revendications 1 à 5, caractérisée par le fait que le premier et le deuxième quadrilatère déformable sont chacun un parallélogramme déformable.

7. Machine agricole selon l'une au moins des revendications 1 à 6, caractérisée par le fait que la première articulation (61, 67 ; 612, 672 ; 613, 673 ; 614, 674) d'un organe de suspension latéral (60, 66 ; 602, 662 ; 603, 663 ; 604, 664) est du type rotule, dont le centre (62, 68 ; 622, 682 ; 623, 683 ; 624, 684) constitue l'axe (62, 68 ; 622, 682 ; 623, 683 ; 624, 684) de ladite articulation (61, 67 ; 612, 672 ; 613, 673 ; 614, 674).

8. Machine agricole selon l'une au moins des revendications 1 à 7, caractérisée par le fait que la deuxième articulation (63, 69 ; 632, 692 ; 633, 693 ; 634, 694) d'un organe de suspension latéral (60, 66 ; 602, 662 ; 603, 663 ; 604, 664) est du type rotule, dont le centre (64, 70 ; 642, 702 ; 643, 703 ; 644, 704) constitue l'axe (64, 70 ; 642, 702 ; 643, 703 ; 644, 704) de ladite articulation (63, 69 ; 632, 692 ; 633, 693 ; 634, 694).

9. Machine agricole selon l'une au moins des revendications 1 à 8, caractérisée par le fait que de chaque côté de la première droite (72 ; 721 ; 722 ; 723 ; 724) est prévu au moins un organe de suspension latéral (60, 66 ; 602, 662 ; 603, 663 ; 604, 664).

10. Machine agricole selon la revendication 9, caractérisée par le fait que les deuxièmes articulations (63, 69 ; 632, 692 ; 633, 693 ; 634, 694) desdits organes de suspension latéraux (60, 66 ; 602, 662 ; 603, 663 ; 604, 664) s'étendent au moins sensiblement symétriquement par rapport à la première droite (72 ; 721 ; 722 ; 723 ; 724).

11. Machine agricole selon l'une au moins des revendications 1 à 10, caractérisée par le fait que l'un au moins des organes de suspension latéraux (60, 66 ; 602, 662 ; 603, 663 ; 604, 664) est muni d'organes de réglage (76, 78, 80, 82, 77, 79, 81, 83 ; 126, 127) destinés au réglage de la distance séparant sa première articulation (61, 67 ; 612, 672 ; 613, 673 ; 614, 674) de sa deuxième articulation (63, 69 ; 632, 692 ; 633, 693 ; 634, 694).

12. Machine agricole selon la revendication 1 ou l'une au moins des revendications 3 à 11 dans leur dépendance à la revendication 1, caractérisée par le fait que le deuxième organe de suspension central (52 ; 521 ; 522 ; 523) s'étend plus haut que le premier organe de suspension central (48).

13. Machine agricole selon la revendication 12, caractérisée par le fait que le deuxième organe de suspension central (52 ; 521 ; 522 ; 523) s'étend au-dessus du premier organe de suspension central (48).

14. Machine agricole selon la revendication 2 ou l'une au moins des revendications 3 à 11 dans leur dépendance à la revendication 2, caractérisée par le fait que les organes de suspension latéraux (604, 664) s'étendent plus haut que l'organe de suspension central (48).

15. Machine agricole selon la revendication 14, caractérisée par le fait que les organes de suspension latéraux (604, 664) s'étendent au-dessus de l'organe de suspension central (48).

16. Machine agricole selon l'une au moins des revendications 1 à 15, caractérisée par le fait qu'elle comporte en sus des moyens (53 ; 531 ; 124, 125 ; 128, 130, 131 ; 130, 131, 133) limitant ou empêchant le déplacement du groupe (19) d'organes de travail (20, 21) transversalement à la direction d'avance (12) au travail.

17. Machine agricole selon la revendication 16 dans sa dépendance à la revendication 1, caractérisée par le fait que les moyens limitant ou empêchant le déplacement du groupe (19) d'organes de travail (20, 21) transversalement à la direction d'avance (12) au travail, sont constitués par la première articulation (53 ; 531) du deuxième organe de suspension central (52 ; 521), qui est du type cylindrique, dont l'axe (54 ; 541) est au moins sensiblement orthogonal au premier plan (56 ; 561).

18. Machine agricole selon la revendication 17, caractérisée par le fait que ladite première articulation (53 ; 531) est du type pivot.

19. Machine agricole selon la revendication 18, caractérisée par le fait que le deuxième organe de suspension central (52) est muni de deux portées cylindriques (90, 91) entre lesquelles est prévu un certain espace (92) et destinées à pivoter sur un tourillon (93) lié au niveau d'une première partie (94) à une aile (87) de la structure (4, 14) et au niveau d'une deuxième partie (96) à une autre aile (86) de la structure (4, 14), de sorte à former la première articulation (53) du type pivot du deuxième organe de suspension central (52), et qu'une rotule (85) faisant partie de l'organe de suspension latéral (60, 66) ou commune à des organes de suspension latéraux (60, 66), s'étend dans l'espace (92) prévu entre les deux portées cylindriques (90, 91) du deuxième organe de suspension central (52), de sorte à former la première articulation (61, 67) dudit ou desdits organes de suspension latéraux (60, 66).

20. Machine agricole selon la revendication 19, caractérisée par le fait que le tourillon (93) comporte un épaulement (97) s'étendant au niveau de l'espace (92) prévu entre les deux portées cylindriques (90, 91) du deuxième organe de suspension central (52), et une partie filetée (101) au niveau de l'extrémité extérieure de sa deuxième partie (96), que la sphère (98) de la rotule (85) est glissée sur la deuxième partie (96) du tourillon (93) jusqu'au niveau de l'épaulement (97), qu'un fourreau (99) est également glissé sur ladite deuxième partie (96) du tourillon (93) de sorte à s'étendre entre ladite sphère (98) et au moins sensiblement ladite extrémité du tourillon (93) où est prévue la partie filetée (101) et qu'un organe d'assemblage à filetage (102) collabore avec ladite partie filetée (101) du tourillon (93) pour serrer la sphère (98) de la rotule (85) entre le fourreau (99) et l'épaulement (97) du tourillon (93).

21. Machine agricole selon la revendication 19 ou 20, caractérisée par le fait que les portées cylindriques (90, 91) s'étendent au moins sensiblement symétriquement par rapport au premier plan (56).

22. Machine agricole selon la revendication 18, caractérisée par le fait que la première articulation (531) du deuxième organe de suspension central (521) est formée par deux rotules (118, 119) espacées l'une de l'autre et dont les centres (120, 121) définissent l'axe (541) de ladite première articulation (531).

23. Machine agricole selon la revendication 22, caractérisée par le fait que les deux rotules (118, 119) s'étendent au moins sensiblement symétriquement par rapport au premier plan (561).

24. Machine agricole selon la revendication 16 dans sa dépendance à la revendication 1, caractérisée par le fait que la première articulation (532 ; 533) du deuxième organe de suspension central (522 ; 523) est du type rotule dont le centre (542 ; 543) constitue l'axe (542 ; 543) de ladite première articulation (532 ; 533) dudit deuxième organe de suspension central (522 ; 523), et que les moyens (124, 125 ; 128, 130, 131) limitant ou empêchant le déplacement du groupe (19) d'organes de travail (20, 21) transversalement à la direction d'avance (12) au travail, limitent ou condamnent le pivotement du groupe (19) d'organes de travail (20, 21) autour d'une droite (742 ; 743) passant par les centres (58, 542 ; 58, 543) des premières articulations (49, 532 ; 49, 533) des organes de suspension centraux (48, 522 ; 48, 523).

25. Machine agricole selon la revendication 24, caractérisée par le fait que lesdits moyens (124, 125) agissent directement sur le groupe (19) d'organes de travail (20, 21).

26. Machine agricole selon la revendication 24, caractérisée par le fait que lesdits moyens (124, 125, 128, 130, 131) agissent directement ou indirectement sur le deuxième organe de suspension central (522 ; 523).

27. Machine agricole selon la revendication 25 ou 26, caractérisée par le fait que lesdits moyens sont constitués par deux butées (124, 125) solidaires de la structure (4, 14).

28. Machine agricole selon la revendication 26, caractérisée par le fait que lesdits moyens sont constitués par un organe (128) et par deux surfaces de guidage (130, 131) au moins sensiblement planes et au moins sensiblement parallèles au premier plan (563), entre lesquelles s'étend ledit organe (128).

29. Machine agricole selon la revendication 28, caractérisée par le fait que ledit organe (128) comporte une partie cylindrique s'étendant entre les deux surfaces de guidage (130, 131) et dont l'axe longitudinal (129) est au moins sensiblement confondu avec la première droite (723).

30. Machine agricole selon la revendication 28 ou 29, caractérisée par le fait que ledit organe (128) est porté par le deuxième organe de suspension central (523).

31. Machine agricole selon la revendication 1 ou l'une au moins des revendications 3 à 13 ou 16 à 30 dans leur dépendance à la revendication 1, caractérisée par le fait que les deux organes de suspension centraux (48, 52 ; 48, 522 ; 48, 523) sont rigides.

32. Machine agricole selon la revendication 1 ou l'une au moins des revendications 3 à 13 ou 16 à 31 dans leur dépendance à la revendication 1, caractérisée par le fait que l'un au moins des organes de suspension latéraux (60, 66; 603, 663) est rigide.

33. Machine agricole selon la revendication 1 ou l'une au moins des revendications 3 à 13 ou 16 à 32 dans leur dépendance à la revendication 1, caractérisée par le fait que de part et d'autre de la première droite (722) s'étend au moins un organe de suspension latéral (602, 662) capable de travailler essentiellement ou uniquement à la traction.

34. Machine agricole selon la revendication 1 ou l'une au moins des revendications 3 à 13 ou 16 à 32, caractérisée par le fait que :
- de part et d'autre de la première droite (721) s'étend au moins un organe de suspension latéral (60, 66) rigide ;
- le deuxième organe de suspension central (521) comporte un (plusieurs) élément(s) (116, 117) capable(s) de travailler essentiellement ou uniquement à la traction ;
- il est prévu des organes de réglage (76, 78, 80, 82, 77, 79, 81, 83 ; 122, 123) pour mettre le (les) élément(s) (116, 117) en précontrainte.

35. Machine agricole selon la revendication 34, caractérisée par le fait que le deuxième organe de suspension central (521) comporte deux éléments (116, 117) chacun lié à son extrémité avant à une portée cylindrique (90, 91) ou à une rotule (118, 119), et à son extrémité arrière à la deuxième articulation (551).

36. Machine agricole selon la revendication 35, caractérisée par le fait que lesdits organes de réglage (122, 123) sont intégrés audit (auxdits) élément(s) (116, 117).

37. Machine agricole selon la revendication 35 ou 36, caractérisée par le fait que les deux éléments (116, 117) s'étendent au moins sensiblement symétriquement par rapport au premier plan (561).

38. Machine agricole selon les revendications 7 et 16 dans leur dépendance à la revendication 2, caractérisée par le fait que les moyens (130, 131, 133) limitant ou empêchant le déplacement du groupe (19) d'organes de travail (20, 21) transversalement à la direction d'avance (12) au travail, limitent ou condamnent le pivotement du groupe (19) d'organes de travail (20, 21) autour d'une droite (744) passant par le centre (58) de la première articulation (49) de l'organe de suspension central (48) et les centres (624, 684) des premières articulations des organes de suspension latéraux (604, 664).

39. Machine agricole selon la revendication 38, caractérisée par le fait que lesdits moyens agissent directement sur le groupe (19) d'organes de travail (20, 21).

40. Machine agricole selon la revendication 38, caractérisée par le fait que lesdits moyens (130, 131, 133) agissent sur l'un au moins des organes de suspension latéraux (604, 664).

41. Machine agricole selon la revendication 40, caractérisée par le fait que lesdits moyens sont constitués par un doigt cylindrique (133), dont l'axe longitudinal (134) est au moins sensiblement confondu avec la première droite (724), et par deux surfaces de guidage (130, 131) au moins sensiblement planes et au moins sensiblement parallèles au premier plan (564), entre lesquelles s'étend ledit doigt cylindrique (133).

42. Machine agricole selon la revendication 41, caractérisée par le fait que le doigt cylindrique (133) est solidaire de l'un au moins des organes de suspension latéraux (604, 664).

43. Machine agricole selon l'une au moins des revendications 1 à 42, caractérisée par le fait qu'elle comporte plusieurs organes de suspension latéraux (60, 66 ; 604, 664) liés rigidement entre eux.

44. Machine agricole selon l'une au moins des revendications 1 à 43, caractérisée par le fait que le groupe (19) d'organes de travail (20, 21) est rigide.

45. Machine agricole selon l'une au moins des revendications 1 à 44, caractérisée par le fait que la structure (4, 14) comporte une console (45) à l'extrémité frontale de laquelle sont liés le ou les organes de suspension centraux (48, 52; 48, 521 ; 48, 522 ; 48, 523) de même que le ou les organes de suspension latéraux (60, 66 ; 601, 661 ; 602, 662 ; 603, 663 ; 604, 664).

## Claims

1. An agricultural machine (1) comprising at least one group (19) of working elements (20, 21) and a structure (4, 14) equipped in particular with a hitching means (4) allowing, during use of the said agricultural machine (1), the hitching of the latter to a motor vehicle (2), the said group (19) of working elements (20, 21) being connected to the said structure (4, 14) by means of a suspension device (22; 221; 222; 223) having suspension means (48, 52, 60, 66; 48, 521, 60, 66; 48, 522, 602, 662; 48, 523, 603, 663) connected on the one hand to the structure (4, 14) by first articulations (49, 53, 61, 67; 49, 531, 61, 67; 49, 532, 612, 672; 49, 533, 613, 673) and on the other hand, to the group (19) of working elements (20, 21) by second articulations (51, 55, 63, 69; 51, 551, 63, 69; 51, 552, 632, 692; 51, 553, 633, 693), the said suspension means (48, 52, 60, 66; 48, 521, 60, 66; 48, 522, 602, 662; 48, 523, 603, 663) comprising:
- a first central suspension element (48) whose first articulation (49) and second articulation (51) are each of the ball type whose centres (58, 59) define, when the group (19) of working elements (20, 21) is horizontal, a first vertical plane (56; 561; 562; 563) directed towards the front during work, and
- at least one lateral suspension element (60, 66; 602, 662; 603, 663), the axis (62, 68; 622, 682; 623, 683) of whose first articulation (61, 67; 612, 672; 613, 673) and the axis (64, 70; 642, 702; 643, 703) of whose second articulation (63, 69; 632, 692; 633, 693) define at least approximately a second plane (71; 711; 712; 713) at least approximately orthogonal to the first plane (56; 561; 562; 563) when the group (19) of working elements (20, 21) is horizontal, and intersecting the first plane (56; 561; 562; 563) along a first straight line (72; 721; 722; 723), the said lateral suspension element(s) (60, 66; 602, 662; 603, 663) forming with the first central suspension element (48) a first quadrilateral deformable in an at least approximately vertical direction, the said second articulation (63, 69; 632, 692; 633, 693) of a lateral suspension element (60, 66; 602, 662; 603, 663) being distanced from the first plane (56; 561; 562; 563) and defining a second straight line (73; 731; 732; 733) orthogonal to the first straight line (72; 721; 722; 723),
characterised in that the said suspension means (48, 52, 60, 66; 48, 521, 60, 66; 48, 522, 602, 662; 48, 523, 603, 663) have in addition a second central suspension element (52; 521; 522; 523) forming with the first central suspension element (48) a second quadrilateral deformable in an at least approximately vertical direction equivalent to the first quadrilateral, and the axis (54; 541; 542; 543) of whose first articulation (53; 531; 532; 533) and the axis (57; 571; 572; 573) of whose second articulation (55; 551; 552; 553) extend at least approximately in the second plane (71; 711; 712; 713), the said second articulation (55; 551; 552; 553) extending in addition at least approximately at the level of the first straight line (72; 721; 722; 723) and its axis (57; 571; 572; 573) having at least approximately one point common (57; 571; 572; 573) with the first straight line (72; 721; 722; 723) and with the second straight line (73; 731; 732; 733), and in that the first articulation (61, 67; 612, 672; 613, 673) of a lateral suspension element (60, 66; 602, 662; 603, 663) extends at least approximately in the first plane (56; 561; 562; 563), its axis (62, 68; 622, 682; 623, 683) being situated at least approximately on the axis (54; 541; 542; 543) of the first articulation (53; 531; 532; 533) of the second central suspension element (52; 521; 522; 523).

2. An agricultural machine (1) comprising at least one group (19) of working elements (20, 21) and a structure (4, 14) equipped in particular with a hitching means (4) allowing, during use of the said agricultural machine (1), the hitching of the latter to a motor vehicle (2), the said group (19) of working elements (20, 21) being connected to the said structure (4, 14) by means of a suspension device (224) having suspension means (48, 604, 664) connected on the one hand to the structure (4, 14) by first articulations (49, 614, 674) and on the other hand, to the group (19) of working elements (20, 21) by second articulations (51, 634, 694), the said suspension means (48, 604, 664) comprising:
- a rigid central suspension element (48) whose first articulation (49) and second articulation (51) are each of the ball type whose centres (58, 59) define, when the group (19) of working elements (20, 21) is horizontal, a first vertical plane (564) directed towards the front during work, and
- at least two rigid lateral suspension elements (604, 664) the axes (624, 684) of whose first articulations (614, 674) and the axes (644, 704) of whose second articulations (634, 694) define at least approximately a second plane (714) at least approximately orthogonal to the first plane (564) when the group (19) of working elements (20, 21) is horizontal, and intersecting the first plane (564) along a first straight line (724), the said lateral suspension elements (604, 664) forming with the central suspension element (48) a quadrilateral deformable in an at least approximately vertical direction, the said second articulations (634, 694) of the lateral suspension elements (604, 664) being distanced from the first plane (564) and defining a second straight line (734) orthogonal to the first straight line (724),
characterised in that the first articulations (614, 674) of the lateral suspension elements (604, 674) extend at least approximately in the first plane (564), their axes (624, 684) being at least approximately coincident.

3. An agricultural machine in accordance with claim 1 or 2, characterised in that the group (19) of working elements (20, 21) has a vertical median plane (11) and in that the first plane (56; 561; 562; 563; 564) is at least approximately coincident with the said median plane (11).

4. An agricultural machine in accordance with one at least of claims 1 to 3, characterised in that the first plane (56; 561; 562; 563; 564) extends, during normal work, at least approximately along the direction of advance (12) during work.

5. An agricultural machine in accordance with one at least of claims 1 to 4, characterised in that the first and the second deformable quadrilaterals are pulled during work.

6. An agricultural machine in accordance with one at least of claims 1 to 5, characterised in that the first and the second deformable quadrilaterals are each a deformable parallelogram.

7. An agricultural machine in accordance with one at least of claims 1 to 6, characterised in that the first articulation (61, 67; 612, 672; 613, 673; 614, 674) of a lateral suspension element (60, 66; 602, 662; 603, 663; 604, 664) is of the ball type, whose centre (62, 68; 622, 682; 623, 683; 624, 684) constitutes the axis (62, 68; 622, 682; 623, 683; 624, 684) of the said articulation (61, 67; 612, 672; 613, 673; 614, 674).

8. An agricultural machine in accordance with one at least of claims 1 to 7, characterised in that the second articulation (63, 69; 632, 692; 633, 693; 634, 694) of a lateral suspension element (60, 66; 602, 662; 603, 663; 604, 664) is of the ball type, whose centre (64, 70; 642, 702; 643, 703; 644, 704) constitutes the axis (64, 70; 642, 702; 643, 703; 644, 704) of the said articulation (63, 69; 632, 692; 633, 693; 634, 694).

9. An agricultural machine in accordance with one at least of claims 1 to 8, characterised in that on each side of the first straight line (72; 721; 722; 723; 724) is provided at least one lateral suspension element (60, 66; 602, 662; 603, 663; 604, 664).

10. An agricultural machine in accordance with claim 9, characterised in that the second articulations (63, 69; 632, 692; 633, 693; 634, 694) of the said lateral suspension elements (60, 66; 602, 662; 603, 663; 604, 664) extend at least approximately symmetrically with regard to the first straight line (72; 721; 722; 723; 724).

11. An agricultural machine in accordance with one at least of claims 1 to 10, characterised in that one at least of the lateral suspension elements (60, 66; 602, 662; 603, 663; 604, 664) is equipped with adjusting elements (76, 78, 80, 82, 77, 79, 81, 83; 126, 127) intended to adjust the distance separating its first articulation (61, 67; 612, 672; 613, 673; 614, 674) from its second articulation (63, 69; 632, 692; 633, 693; 634, 694).

12. An agricultural machine in accordance with claim 1 or one at least of claims 3 to 11 in their dependence on claim 1, characterised in that the second central suspension element (52; 521; 522; 523) extends higher than the first central suspension element (48).

13. An agricultural machine in accordance with claim 12, characterised in that the second central suspension element (52; 521; 522; 523) extends above the first central suspension element (48).

14. An agricultural machine in accordance with claim 2 or one at least of claims 3 to 11 in their dependence on claim 2, characterised in that the lateral suspension elements (604, 664) extend higher than the central suspension element (48).

15. An agricultural machine in accordance with claim 14, characterised in that the lateral suspension elements (604, 664) extend above the central suspension element (48).

16. An agricultural machine in accordance with one at least of claims 1 to 15, characterised in that it has in addition means (53; 531; 124, 125; 128, 130, 131; 130, 131, 133) limiting or preventing the displacement of the group (19) of working elements (20, 21) transversely to the direction of advance (12) during work.

17. An agricultural machine in accordance with claim 16 in its dependence on claim 1, characterised in that the means limiting or preventing the displacement of the group (19) of working elements (20, 21) transversely to the direction of advance (12) during work, are formed by the first articulation (53; 531) of the second central suspension element (52; 521), which is of the cylindrical type, whose axis (54; 541) is at least approximately orthogonal to the first plane (56; 561).

18. An agricultural machine in accordance with claim 17, characterised in that the said first articulation (53; 531) is of the pivot-type.

19. An agricultural machine in accordance with claim 18, characterised in that the second central suspension element (52) is equipped with two cylindrical bearings (90, 91) between which is provided a certain space (92) and intended to pivot on a spindle (93) connected in the region of a first part (94) to a wing (87) of the structure (4, 14) and in the region of a second part (96) to another wing (86) of the structure (4, 14) in such a way as to form the first articulation (53) of the pivot-type of the second central suspension element (52), and in that a ball joint (85) forming part of the lateral suspension element (60, 66) or common to the lateral suspension elements (60, 66) extends in the space (92) provided between the two cylindrical bearings (90, 91) of the second central suspension element (52), in such a way as to form the first articulation (61, 67) of the said lateral suspension element(s) (60, 66).

20. An agricultural machine in accordance with claim 19, characterised in that the spindle (93) has a shoulder (97) extending in the region of the space (92) provided between the two cylindrical bearings (90, 91) of the second central suspension element (52), and a threaded part (101) in the region of the outer end of its second part (96), in that the sphere (98) of the ball joint (85) is slid onto the second part (96) of the spindle (93) up to the region of the shoulder (97), in that a sleeve (99) is also slid onto the said second part (96) of the spindle (93) in such a way as to extend between the said sphere (98) and at least approximately the said end of the spindle (93) where the threaded part (101) is provided and in that a threaded assembly element (102) cooperates with the said threaded part (101) of the spindle (93) in order to squeeze the sphere (98) of the ball joint (85) between the sleeve (99) and the shoulder (97) of the spindle (93).

21. An agricultural machine in accordance with claim 19 or 20, characterised in that the cylindrical bearings (90, 91) extend at least approximately symmetrically in relation to the first plane (56).

22. An agricultural machine in accordance with claim 18, characterised in that the first articulation (531) of the second central suspension element (521) is formed by two ball joints (118, 119) spaced apart from each other and whose centres (120, 121) define the axis (541) of the said first articulation (531).

23. An agricultural machine in accordance with claim 22, characterised in that the two ball joints (118, 119) extend at least approximately symmetrically in relation to the first plane (561).

24. An agricultural machine in accordance with claim 16 in its dependence on claim 1, characterised in that the first articulation (532; 533) of the second central suspension element (522; 523) is of the ball type whose centre (542; 543) constitutes the axis (542; 543) of the said first articulation (532; 533) of the said second central suspension element (522; 523), and in that the means (124, 125; 128, 130, 131) limiting or preventing the displacement of the group (19) of working elements (20, 21) transversely to the direction of advance (12) during work, limit or lock the pivoting of the group (19) of working elements (20, 21) about a straight line (742; 743) passing through the centres (58, 542; 58, 543) of the first articulations (49, 532; 49, 533) of the central suspension elements (48, 522; 48, 523).

25. An agricultural machine in accordance with claim 24, characterised in that the said means (124, 125) act directly on the group (19) of working elements (20, 21).

26. An agricultural machine in accordance with claim 24, characterised in that the said means (124, 125, 128, 130, 131) act directly or indirectly on the second central suspension element (522; 523).

27. An agricultural machine in accordance with claim 25 or 26, characterised in that the said means are formed by two stops (124, 125) solidly attached to the structure (4, 14).

28. An agricultural machine in accordance with claim 26, characterised in that the said meals are formed by an element (128) and two guide surfaces (130, 131) which are at least approximately flat and at least approximately parallel to the first plane (563), between which the said element (128) extends.

29. An agricultural machine in accordance with claim 28, characterised in that the said element (128) has a cylindrical part extending between the two guide surfaces (130, 131) and whose longitudinal axis (129) is at least approximately coincident with the first straight line (723).

30. An agricultural machine in accordance with claim 28 or 29, characterised in that the said element (128) is carried by the second central suspension element (523).

31. An agricultural machine in accordance with claim 1 or one at least of claims 3 to 13 or 16 to 30 in their dependence on claim 1, characterised in that the two central suspension elements (48, 52; 48, 522; 48, 523) are rigid.

32. An agricultural machine in accordance with claim 1 or one at least of claims 3 to 13 or 16 to 31 in their dependence on claim 1, characterised in that one at least of the lateral suspension elements (60, 66; 603, 663) is rigid.

33. An agricultural machine in accordance with claim 1 or one at least of claims 3 to 13 or 16 to 32 in their dependence on claim 1, characterised in that on either side of the first straight line (722) extends at least one lateral suspension element (602, 662) capable of working essentially or only in traction.

34. An agricultural machine in accordance with claim 1 or one at least of claims 3 to 13 or 16 to 32, characterised in that:
- on either side of the first straight line (721) extends at least one rigid lateral suspension element (60, 66);
- the second central suspension element (521) has one (several) element(s) (116, 117) capable of working essentially or only in traction;
- there are provided adjusting elements (76, 78, 80, 82, 77, 79, 81, 83; 122, 123) for prestressing the element(s) (116, 117).

35. An agricultural machine in accordance with claim 34, characterised in that the second central suspension element (521) has two elements (116, 117) each connected at their front end to a cylindrical bearing (90, 91) or to a ball joint (118, 119), and at their rear end to the second articulation (551).

36. An agricultural machine in accordance with claim 35, characterised in that the said adjusting elements (122, 123) are integrated with the said element(s) (116, 117).

37. An agricultural machine in accordance with claim 35 or 36, characterised in that the two elements (116, 117) extend at least approximately symmetrically in relation to the first plane (561).

38. An agricultural machine in accordance with claims 7 and 16 in their dependence on claim 2, characterised in that the means (130, 131, 133) limiting or preventing the displacement of the group (19) of working elements (20, 21) transversely to the direction of advance (12) during work, limit or lock the pivoting of the group (19) of working elements (20, 21) about a straight line (744) passing through the centre (58) of the first articulation (49) of the central suspension element (48) and the centres (624, 684) of the first articulations of the lateral suspension elements (604, 664).

39. An agricultural machine in accordance with claim 38, characterised in that the said means act directly on the group (19) of working elements (20, 21).

40. An agricultural machine in accordance with claim 38, characterised in that the said means (130, 131, 133) act on one at least of the lateral suspension elements (604, 664).

41. An agricultural machine in accordance with claim 40, characterised in that the said means are formed by a cylindrical finger (133) whose longitudinal axis (134) is at least approximately concident with the first straight line (724), and by two guide surfaces (130, 131) which are at least approximately flat and at least approximately parallel to the first plane (564), between which the said cylindrical finger (133) extends.

42. An agricultural machine in accordance with claim 41, characterised in that the cylindrical finger (133) is solidly attached to one at least of the lateral suspension elements (604, 664).

43. An agricultural machine in accordance with one at least of claims 1 to 42, characterised in that it has several lateral suspension elements (60, 66; 604, 664) connected rigidly together.

44. An agricultural machine in accordance with one at least of claims 1 to 43, characterised in that the group (19) of working elements (20, 21) is rigid.

45. An agricultural machine in accordance with one at least of claims 1 to 44, characterised in that the structure (4, 14) has a bracket (45) at the front end of which are connected the central suspension element or elements (48, 52; 48, 521; 48, 522; 48, 523) as well as the lateral suspension element or elements (60, 66; 601, 661; 602, 662; 603, 663; 604, 664).

## Patentansprüche

1. Landwirtschaftliche Maschine (1), die mindestens eine Gruppe (19) von Arbeitsorganen (20, 21) und eine Anordnung (4, 14) aufweist die insbesondere mit einem Kupplungsmittel (4) versehen ist, das bei Verwendung der landwirtschaftlichen Maschine (1) ermöglicht, diese an ein Motorfahrzeug (2) anzukuppeln, wobei die Gruppe (19) von Arbeitsorganen (20, 21) mit der Anordnung (4, 14) mittels einer Aufhängevorrichtung (22 ; 221; 222 ; 223) verbunden ist, die Aufhängemittel (48, 52, 60, 66 ; 48, 521, 60, 66 ; 48, 522, 602, 662 ; 48, 523, 603, 663) umfasst, die einerseits mit der Anordnung (4, 14) durch erste Gelenke (49, 53, 61, 67 ; 49, 531, 61, 67 ; 49, 532, 612, 672 ; 49, 533, 613, 673) und anderseits mit der Gruppe (19) von Arbeitsorganen (20, 21) durch zweite Gelenke (51, 55, 63, 69 ; 51, 551, 63, 69 ; 51, 552, 632, 692 ; 51, 553, 633, 693) verbunden sind, welche Aufhängemittel (48, 52, 60, 66 ; 48, 521, 60, 66, 48 ; 522, 602, 662 ; 48, 523, 603, 663) :
- ein erstes zentrales Aufhängorgan (48), dessen erste Gelenk (49) und dessen zweites Gelenk (51) jeweils vom Typ eines Kugelgelenks sind, deren Mittelpunkte (58, 59) eine erste, im Betrieb nach vorne gerichtete Vertikalebene (56 ; 561, 562 ; 563) definieren, wenn die Gruppe (19) von Arbeitsorganen (20, 21) horizontal ist, und
- mindestens ein seitliches Aufhängorgan (60, 66 ; 602, 662 ; 603, 663), von dem die Achse (62, 68 ; 622, 682; 623, 683) des ersten Gelenks (61, 67 ; 612, 672 ; 613, 673) und die Achse (64, 70 ; 642, 702 ; 643, 703) des zweiten Gelenks (63, 69 ; 632, 692 ; 633, 693) zumindest im wesentlichen eine zweite Ebene (71 ; 711 ; 712 ; 713) definieren, die zur ersten Ebene (56 ; 561 ; 562 ; 563) zumindest im wesentlichen rechtwinkelig ist, wenn die Gruppe (19) von Arbeitsorganen (20, 21) horizontal ist, und die erste Ebene (56 ; 561 ; 562 ; 563) nach einer ersten Geraden (72 ; 721 ; 722 ; 723) schneidet, welches (welche) seitliche(n) Aufhängorgan(e) (60, 66 ; 602, 662 ; 603, 663) mit dem ersten zentralen Aufhängorgan (48) ein erstes, in eine zumindest im wesentlichen vertikale Richtung deformierbares Viereck bilden, wobei das zweite Gelenk (63, 69 ; 632, 692 ; 633, 693) des seitlichen Aufhängorgans (60, 66 ; 602, 662 ; 603, 663) von der ersten Ebene (56 ; 561 ; 562 ; 563) entfernt liegt und eine zur ersten Geraden (72 ; 721 ; 722 ; 723) rechtwinkelige zweite Gerade (73 ; 731 ; 732 ; 733) definiert,
umfassen, dadurch gekennzeichnet, dass die Aufhängemittel (48, 52, 60, 66 ; 48, 521, 60, 66 ; 48, 522, 602, 662 ; 48, 523, 603, 663) noch ein zweites zentrales Aufhängorgan (52 ; 521 ; 522 ; 523) aufweisen, das mit dem ersten zentralen Aufhängorgan (48) ein zweites, gleich dem ersten Viereck in eine zumindest im wesentlichen vertikale Richtung deformierbares Viereck bilden, und von welchem die Achse (54 ; 541 ; 542 ; 543) des ersten Gelenks (53 ; 531 ; 532 ; 533) und die Achse (57 ; 571 ; 572 ; 573) des zweiten Gelenks (55 ; 551 ; 552 ; 553) sich zumindest im wesentlichen in der zweiten Ebene (71 ; 711 ; 712 ; 713) erstrecken, wobei sich das zweite Gelenk (55 ; 551 ; 552 ; 553) überdies zumindest im wesentlichen im Bereich der ersten Geraden (72 ; 721 ; 722 ; 723) erstreckt und seine Achse (57 ; 571 ; 572 ; 573) zumindest im wesentlichen einen gemeinsamen Punkt (57 ; 571 ; 572 ; 573) mit der ersten Geraden (72 ; 721 ; 722 ; 723) und mit der zweiten Geraden (73 ; 731 ; 732, 733) hat, und dass das erste Gelenk (61, 67 ; 612, 672 ; 613, 673) eines seitlichen Aufhängorgans (60, 66 ; 602, 662 ; 603, 663) sich zumindest im wesentlichen in der ersten Ebene (56 ; 561 ; 562 ; 563) erstreckt, wobei seine Achse (62, 68 ; 622, 682 ; 623, 683) zumindest im wesentlichen auf der Achse (54 ; 541 ; 542 ; 543) des ersten Gelenks (53 ; 531 ; 532 ; 533) des zweiten zentralen Aufhängorgans (52 ; 521 ; 522 ; 523) angeordnet ist.

2. Landwirtschaftliche Maschine (1), die mindestens eine Gruppe (19) von Arbeitsorganen (20, 21) und eine Anordnung (4, 14) aufweist, die insbesondere mit einem Kupplungsmittel (4) versehen ist, das bei Verwendung der landwirtschaftlichen Maschine (1) ermöglicht, diese an ein Motorfahrzeug (2) anzukuppeln, wobei die gruppe (19) von Arbeitsorganen (20, 21) mit der Anordnung (4, 14) mittels einer Aufhängevorrichtung (224) verbunden ist, die Aufhängemittel (48, 604, 664) umfasst, die einerseits mit der Anordnung (4, 14) durch erste Gelenke (49, 614, 674) und anderseits mit der Gruppe (19) von Arbeitsorganen (20, 21) durch zweite Gelenke (51, 634, 694) verbunden sind, welche Aufhängemittel (48, 604, 664) verbunden sind, welche Aufhängemittel (48, 604, 664) :
- ein starres zentrales Aufhängorgan (48), dessen erstes Gelenk (49) und dessen zweites Gelenk (51) jeweils vom Typ eines Kugelgelenks sind, deren Mittelpunkte (58, 59) eine erste, im Betrieb nach vorne gerichtete Vertikalebene (564) definieren, wenn die Gruppe (19) von Arbeitsorganen (20, 21) horizontal ist, und
- mindestens zwei starre seitliche Aufhängorgane (604, 664), von welchen die Achsen (624, 684) der ersten Gelenke (614, 674) und die Achsen (644, 704) der zweiten Gelenke (634, 694) zumindest im wesentlichen eine zweite Ebene (714) definieren, die zur ersten Ebene (564) zumindest im wesentlichen rechtwinkelig ist, wenn die Gruppe (19) von Arbeitsorganen (20, 21) horizontal ist, und die erste Ebene (564) nach einer ersten Geraden (724) schneidet, welche seitlichen Aufhängorgane (604, 664) mit dem zentralen Aufhängorgan (48) ein in eine zumindest im wesentlichen vertikale Richtung deformierbares Viereck bilden, wobei die zweiten Gelenke (634, 694) der seitlichen Aufhängorgane (604, 664) von der ersten Ebene (564) entfernt liegen und eine zur ersten Geraden (724) rechtwinkelige zweite Gerade (734) definieren,
umfassen, dadurch gekennzeichnet, dass die ersten Gelenke (614, 674) der seitlichen Aufhängorgane (604, 674) sich zumindest im wesentliche in der ersten Ebene (564) erstrecken, wobei deren Achsen (624, 684) zumindest im wesentlichen zusammenfallen.

3. Landwirtschaftliche Maschine nach Anspruch 1 oder 2, dadurch gekennzeichnet, dass die Gruppe (19) von Arbeitsorganen (20, 21) eine vertikale Mittelebene (11) aufweist und dass die erste Ebene (56 ; 561 ; 562 ; 563 ; 564) zumindest im wesentlichen mit der Mittelebene (11) zusammenfällt.

4. Landwirtschaftliche Maschine nach mindestens einem der Ansprüche 1 bis 3, dadurch gekennzeichnet, dass die erste Ebene (56 ; 561 ; 562 ; 563 ; 564) sich im Normalbetrieb zumindest im wesentlichen in Arbeitsvorschubrichtung (12) erstreckt.

5. Landwirtschaftliche Maschine nach mindestens einem der Ansprüche 1 bis 4, dadurch gekennzeichnet, dass das erste und zweite deformierbare Viereck während des Betriebs gezogen werden.

6. Landwirtschaftliche Maschine nach mindestens einem der Ansprüche 1 bis 5, dadurch gekennzeichnet, dass das erste und das zweite deformierbare Viereck jeweils ein deformierbares Parallelogramm ist.

7. Landwirtschaftliche Maschine nach mindestens einem der Ansprüche 1 bis 6, dadurch gekennzeichnet, dass das erste Gelenk (61, 67 ; 612, 672 ; 613, 673 ; 614, 674) eines seitlichen Aufhängorgans (60, 66 ; 602, 662 ; 603, 663 ; 604, 664) vom Typ eines Kugelgelenks ist, dessen Mittelpunkt (62, 68 ; 622, 682 ; 623, 683 ; 624, 684) die Achse (62, 68 ; 622, 682 ; 623, 683 ; 624, 684) des Gelenks (61, 67 ; 612, 672 ; 613, 673 ; 614, 674) bildet.

8. Landwirtschaftliche Maschine nach mindestens einem der Ansprüche 1 bis 7, dadurch gekennzeichnet, dass das zweite Gelenk (63, 69 ; 632, 692 ; 633, 693 ; 634, 694) eines seitlichen Aufhängorgans (60, 66 ; 602, 662 ; 603, 663 ; 604, 664) vom Typ eines Kugelgelenks ist, dessen Mittelpunkt (64, 70 ; 642, 702 ; 643, 703 ; 644, 704) die Achse (64, 70 ; 642, 702, 643, 703 ; 644, 704) des Gelenks (63, 69 ; 632, 692 ; 633, 693 ; 634, 694) bildet.

9. Landwirtschaftliche Maschine nach mindestens einem der Ansprüche 1 bis 8, dadurch gekennzeichnet, dass auf jeder Seite der ersten Geraden (72 ; 721 ; 722 ; 723 ; 724) zumindest ein seitliches Aufhängorgan (60, 66 ; 602, 662 ; 603, 663 ; 604, 664) vorgesehen ist.

10. Landwirtschaftliche Maschine nach Anspruch 9, dadurch gekennzeichnet, dass die zweiten Gelenke (63, 69 ; 632, 692 ; 633, 693 ; 634, 694) der seitlichen Aufhängorgane (60, 66 ; 602, 662 ; 603, 663 ; 604, 664) sich zumindest im wesentlichen symmetrisch zur ersten Geraden (72 ; 721 ; 722 ; 723 ; 724) erstrecken.

11. Landwirtschaftliche Maschine nach mindestens einem der Ansprüche 1 bis 10, dadurch gekennzeichnet, dass zumindest eines der seitlichen Aufhängorgane (60, 66 ; 602, 662 ; 603, 663 ; 604, 664) mit Einstellorganen (76, 78, 80, 82, 77, 79, 81, 83 ; 126, 127) versehen ist, die zur Einstellung des Abstandes des ersten Gelenks (61, 67 ; 612, 672 ; 613, 673 ; 614, 674) vom zweiten Gelenk (63, 69 ; 632, 692 ; 633, 693 ; 634, 694) dienen.

12. Landwirtschaftliche Maschine nach Anspruch 1 oder mindestens einem der Ansprüche 3 bis 11 in ihrer Abhängigkeit von Anspruch 1, dadurch gekennzeichnet, dass das zweite zentrale Aufhängorgan (52 ; 521 ; 522 ; 523) sich höher als das erste zentrale Aufhängorgan (48) erstreckt.

13. Landwirtschaftliche Maschine nach Anspruch 12, dadurch gekennzeichnet, dass das zweite zentrale Aufhängorgan (52 ; 521 ; 522 ; 523) sich über dem ersten zentralen Aufhängorgan (48) erstreckt.

14. Landwirtschaftliche Maschine nach Anspruch 2 oder mindestens einem der Ansprüche 3 bis 11 in ihrer Abhängigkeit von Anspruch 2, dadurch gekennzeichnet, dass die seitlichen Aufhängorgane (604, 664) sich höher als das zentrale Aufhängorgan (48) erstrecken.

15. Landwirtschaftliche Maschine nach Anspruch 14, dadurch gekennzeichnet, dass die seitlichen Aufhängorgane (604, 664) sich über dem zentralen Aufhängorgan (48) erstrecken.

16. Landwirtschaftliche Maschine nach mindestens einem der Ansprüche 1 bis 15, dadurch gekennzeichnet, dass sie noch Mittel (53, 531 ; 124, 125 ; 128, 130, 131 ; 130, 131, 133) aufweist, die die Bewegung der Gruppe (19) von Arbeitsorganen (20, 21) quer zur Arbeitsvorschubrichtung (12) begrenzen oder verhindern.

17. Landwirtschaftliche Maschine nach Anspruch 16 in seiner Abhängigkeit von Anspruch 1, dadurch gekennzeichnet, dass die die Bewegung der Gruppe (19) von Arbeitsorganen (20, 21) quer zur Arbeitsvorschubrichtung (12) begrenzenden oder verhindernden Mittel durch das erste Gelenk (53 ; 531) des zweiten zentralen Aufhängorgans (52 ; 521) gebildet sind, welches Gelenk zylinderartig ist und dessen Achse (54 ; 541) zumindest im wesentlichen rechtwinkelig zur ersten Ebene (56 ; 561) ist.

18. Landwirtschaftliche Maschine nach Anspruch 17, dadurch gekennzeichnet, dass das erste Gelenk (53 ; 531) vom Typ eines Zylindergelenks ist.

19. Landwirtschaftliche Maschine nach Anspruch 18, dadurch gekennzeichnet, dass das zweite zentrale Aufhängorgan (52) mit zwei zylindrischen Sitzen (90, 91) versehen ist, zwischen welchen eine gewisser Zwischenraum (92) vorgesehen ist und die dazu bestimmt sind, auf einem Achszapfen (93) zu drehen, der im Bereich eines ersten Teiles (94) mit einem Flügel (87) der Anordnung (4, 14) und im Bereich eines zweiten Teiles (96) mit einem anderen Flügel (86) der Anordnung (4, 14) derart verbunden ist, um das erste Gelenk (53) vom Typ eines Zylindergelenks des zweiten zentralen Aufhängorgans (52) zu bilden, und dass ein Kugelgelenk (85), das zum seitlichen Aufhängorgan (60, 66) oder den seitlichen Aufhängorganen (60, 66) gemein ist, sich im zwischen den zwei zylindrischen Sitzen (90, 91) des zweiten zentralen Aufhängorgans (52) vorgesehenen Zwischenraum (92) erstreckt, um so das erste Gelenk (61, 67) des (der) seitlichen Aufhängorganes (Aufhängorgane) (60, 61) zu bilden.

20. Landwirtschaftliche Maschine nach Anspruch 19, dadurch gekennzeichnet, dass der Achszapfen (93) eine Schulter (97), die sich im Bereich des zwischen den zwei zylindrischen Sitzen (90, 91) des zweiten zentralen Aufhängorgans (52) vorgesehenen Zwischenraumes (92) erstreckt, und einen Gewindeteil (101) im Bereich des äusseren Endes seines zweiten Teils (96) aufweist, dass die Kugel (98) des Kugelgelenks (85) auf den zweiten Teil (96) des Achszapfens (93) bis in den Bereich der Schulter (97) aufgeschoben ist, dass eine Hülse (99) ebenfalls über den zweiten Teil (96) des Achszapfens (93) derart geschoben ist, dass sie sich zwischen dieser Kugel (98) und zumindest im wesentlichen diesem Ende des Achszapfens (93), wo der Gewindeteil (101) vorgesehen ist, erstreckt, und dass ein mit Gewinde versehenes Verbindungsorgan (102) mit diesem Gewindeteil (101) des Achszapfens (93) zusammenarbeitet, um die Kugel (98) des Kugelgelenks (85) zwischen der Hülse (99) und der Schulter (97) des Achszapfens (93) festzuklemmen.

21. Landwirtschaftliche Maschine nach Anspruch 19 oder 20, dadurch gekennzeichnet, dass die zylindrischen Sitze (90, 91) sich zumindest im wesentlichen zymmetrisch zur ersten Ebene (56) erstrecken.

22. Landwirtschaftliche Maschine nach Anspruch 18, dadurch gekennzeichnet, dass das erste Gelenk (531) des zweiten zentralen Aufhängorgans (521) durch zwei Kugelgelenke (118, 119) gebildet ist, die einen Abstand voneinander aufweisen und deren Mittelpunkte (120, 121) die Achse (541) dieses ersten Gelenks (531) definieren.

23. Landwirtschaftliche Maschine nach Anspruch 22, dadurch gekennzeichnet, dass sich die zwei Kugelgelenke (118, 119) zumindest im wesentlichen symmetrisch zur ersten Ebene (561) erstrecken.

24. Landwirtschaftliche Maschine nach Anspruch 16 in seiner Abhängigkeit von Anspruch 1, dadurch gekennzeichnet, dass das erste Gelenk (532 ; 533) des zweiten zentralen Aufhängorgans (522 ; 523) vom Typ eines Kugelgelenks ist, dessen Mittelpunkt (542 ; 543) die Achse (542 ; 543) des ersten Gelenks (532 ; 533) des zweiten zentralen Aufhängorgans (522 ; 523) bildet, und dass die Mittel (124, 125 ; 128, 130, 131), die die Bewegung der Gruppe (19) von Arbeitsorganen (20, 21) quer zur Arbeitsvorschubrichtung (12) begrenzen oder verhindern, die Verschwenkung der Gruppe (19) von Arbeitsorganen (20, 21) um eine Gerade (742 ; 743), die durch die Mittelpunkte (58, 542 ; 58, 543) der ersten Gelenke (49, 532 ; 49, 533) der zentralen Aufhängorgane (48, 522 ; 48, 523) begrenzen oder verhindern.

25. Landwirtschaftliche Maschine nach Anspruch 24, dadurch gekennzeichnet, dass die Mittel (124, 125) direkt auf die Gruppe (19) von Arbeitsorganen (20, 21) wirken.

26. Landwirtschaftliche Maschine nach Anspruch 24, dadurch gekennzeichnet, dass die Mittel (124, 125, 128, 130, 131) direkt oder indirekt auf das zweite zentrale Aufhängorgan (522 ; 523) wirken.

27. Landwirtschaftliche Maschine nach Anspruch 25 oder 26, dadurch gekennzeichnet, dass die Mittel aus zwei mit der Anordnung (4, 14) fest verbundenen Anschlägen (124, 125) gebildet sind.

28. Landwirtschaftliche Maschine nach Anspruch 26, dadurch gekennzeichnet, dass die Mittel aus einem Organ (128) und aus zwei Führungsflächen (130, 131) gebildet sind, die zumindest im wesentlichen eben und zumindest im wesentlichen parallel zur ersten Ebene (563) sind, zwischen welchen sich das Organ (128) erstreckt.

29. Landwirtschaftliche Maschine nach Anspruch 28, dadurch gekennzeichnet, dass das Organ (128) einen zylindrischen Teil aufweist, der sich zwischen den zwei Führungsflächen (130, 131) erstreckt und dessen Längsachse (129) zumindest im wesentlichen mit der ersten Geraden (723) zusammenfällt.

30. Landwirtschaftliche Maschine nach Anspruch 28 oder 29, dadurch gekennzeichnet, dass das Organ (128) durch das zweite zentrale Aufhängorgan (523) getragen wird.

31. Landwirtschaftliche Maschine nach Anspruch 1 oder mindestens einem der Ansprüche 3 bis 13 oder 16 bis 30 in ihrer Abhängigkeit von Anspruch 1, dadurch gekennzeichnet, dass die zwei zentralen Aufhängorgane (48, 52 ; 48, 522 ; 48, 523) starr sind.

32. Landwirtschaftliche Maschine nach Anspruch 1 oder mindestens einem der Ansprüche 3 bis 13 oder 16 bis 31 in ihrer Abhängigkeit von Anspruch 1, dadurch gekennzeichnet, dass zumindest das eine der seitlichen Aufhängorgane (60, 66 ; 603, 663) starr ist.

33. Landwirtschaftliche Maschine nach Anspruch 1 oder mindestens einem der Ansprüche 3 bis 13 oder 16 bis 32 in ihrer Abhängigkeit von Anspruch 1, dadurch gekennzeichnet, dass sich beidseits der ersten Geraden (722) zumindest ein seitliches Aufhängorgan (602, 662) erstreckt, das imstande ist, im wesentlichen oder ausschliesslich unter Zug zu arbeiten.

34. Landwirtschaftliche Maschine nach Anspruch 1 oder mindestens einem der Ansprüche 3 bis 13 oder 16 bis 32, dadurch gekennzeichnet, dass :
- sich beidseits der ersten Geraden (721) mindestens ein starres seitliches Aufhängorgan (60, 66) erstreckt ;
- das zweite zentrale Aufhängorgan (521) ein (mehrere) Element(e) (116, 117) umfasst, dass (die) imstande ist (sind), im wesentlichen oder ausschliesslich unter Zug zu arbeiten ;
- Einstellorgane (76, 78, 80, 82, 77, 79, 81, 83 ; 122, 123) zum Vorspannen des (der) Elementes (Elemente) (116, 117) vorgesehen sind.

35. Landwirtschaftliche Maschine nach Anspruch 34, dadurch gekennzeichnet, dass das zweite zentrale Aufhängorgan (521) zwei Elemente (116, 117) aufweist, von welchen jedes an seinem vorderen Ende mit einem zylindrischen Sitz (90, 91) oder mit einem Kugelgelenk (118, 119) und an seinem hinteren Ende mit dem zweiten Gelenk (551) verbunden ist.

36. Landwirtschaftliche Maschine nach Anspruch 35, dadurch gekennzeichnet, dass die Einstellorgane (122, 123) in dem (den) Element(en) (116, 117) integriert ist (sind).

37. Landwirtschaftliche Maschine nach Anspruch 35 oder 36, dadurch gekennzeichnet, dass die zwei Elemente (116, 117) sich zumindest im wesentlichen symmetrisch zur ersten Ebene (561) erstrecken.

38. Landwirtschaftliche Maschine nach den Ansprüchen 7 und 16 in ihrer Abhängigheit von Anspruch 2, dadurch gekennzeichnet, dass die Mittel (130, 131, 133), die die Bewegung der Gruppe (19) von Arbeitsorganen (20, 21) quer zur Arbeitsvorschubrichtung (12) begrenzen oder verhindern, die Verschwenkung der Gruppe (19) von Arbeitsorganen (20, 21) um eine Gerade (744), die durch den Mittelpunkt (58) des ersten Gelenks (49) des zentralen Aufhängorgans (48) und die Mittelpunkte (624, 684) der ersten Gelenke der seitlichen Aufhängorgane (604, 664) verläuft, begrenzen oder verhindern.

39. Landwirtschaftliche Maschine nach Anspruch 38, dadurch gekennzeichnet, dass diese Mittel direkt auf die Gruppe (19) von Arbeitsorganen (20, 21) wirken.

40. Landwirtschaftliche Maschine nach Anspruch 38, dadurch gekennzeichnet, dass diese Mittel (130, 131, 133) auf mindestens eines der seitlichen Aufhängorgane (604, 664) wirken.

41. Landwirtschaftliche Maschine nach Anspruch 40, dadurch gekennzeichnet, dass diese Mittel aus einem zylindrischen Finger (133), dessen Längsachse (134) zumindest im wesentlichen mit der ersten Geraden (724) zusammenfällt, und aus zwei zumindest im wesentlichen ebenen und zumindest im wesentlichen zur ersten Ebene (564) parallelen Führungsflächen (130, 131) gebildet werden, zwischen welchen sich dieser zylindrische Finger (133) erstreckt.

42. Landwirtschaftliche Maschine nach Anspruch 41, dadurch gekennzeichnet, dass der zylindrische Finger (133) mit mindestens einem der seitlichen Aufhängorgane (604, 664) fest verbunden ist.

43. Landwirtschaftliche Maschine nach mindestens einem der Ansprüche 1 bis 42, dadurch gekennzeichnet, dass sie mehrere miteinander starr verbundene seitliche Aufhängorgane (60, 66 ; 604, 664) umfasst.

44. Landwirtschaftliche Maschine nach mindestens einem der Ansprüche 1 bis 43, dadurch gekennzeichnet, dass die Gruppe (19) von Arbeitsorganen (20, 21) starr ist.

45. Landwirtschaftliche Maschine nach mindestens einem der Ansprüche 1 bis 44, dadurch gekennzeichnet, dass die Anordnung (4, 14) eine Konsole (45) aufweist, mit derem vorderen Ende das oder die zentrale(n) Aufhängorgan(e) (48, 52 ; 48, 521 ; 48, 522 ; 48 ; 523) sowie das oder die seitliche(n) Aufhängorgan(e) (60, 66 ; 601, 661 ; 602, 662 ; 603, 663 ; 604 ; 664) verbunden sind.
